# EUROPEAN PATENT SPECIFICATION

(11) **EP 4 383 596 B1**
(45) Date of publication and mention of the grant of the patent: **17.06.2026**
(21) Application number: 22871778.1
(22) Date of filing: 01.09.2022
(51) Int. Cl.: H04J 3/06, H04L 12/00

(54) **CLOCK SYNCHRONIZATION METHOD AND APPARATUS, AND VEHICLE**
TAKTSYNCHRONISATIONSVERFAHREN UND -VORRICHTUNG SOWIE FAHRZEUG
APPAREIL ET PROCÉDÉ DE SYNCHRONISATION D'HORLOGE, ET VÉHICULE

(30) Priority: 27.09.2021 CN 202111134429
(43) Date of publication of application: 12.06.2024
(73) Proprietor: Yinwang Intelligent Technologies Co., Ltd., Shenzhen, Guangdong 518129 (CN)
(72) Inventor: HUANG, Ziliang, Shenzhen, Guangdong 518129 (CN)
(74) Representative: Pfenning, Meinig & Partner mbB
(86) International application number: PCT/CN2022/116553
(87) International publication number: WO 2023/045728

(56) References cited:
- WO-A1-2021/097718
- WO-A1-2021/097718
- CN-A- 110 830 141
- CN-A- 113 242 105
- US-A1- 2011 019 558
- US-B2- 12 101 172
- HALEPLIDIS E ET AL: "Software-Defined Networking (SDN): Layers and Architecture Terminology; rfc7426.txt", SOFTWARE-DEFINED NETWORKING (SDN): LAYERS AND ARCHITECTURE TERMINOLOGY; RFC7426.TXT, INTERNET ENGINEERING TASK FORCE, IETF; STANDARD, INTERNET SOCIETY (ISOC) 4, RUE DES FALAISES CH- 1205 GENEVA, SWITZERLAND, 7 January 2015 (2015-01-07), pages 1 - 35, XP015104526, [retrieved on 20150107]
- HACKEL TIMO ET AL: "Software-Defined Networks Supporting Time-Sensitive In-Vehicular Communication", 2019 IEEE 89TH VEHICULAR TECHNOLOGY CONFERENCE (VTC2019-SPRING), IEEE, 28 April 2019 (2019-04-28), pages 1 - 5, XP033568228, [retrieved on 20190625], DOI: 10.1109/VTCSPRING.2019.8746473

## Description

### TECHNICAL FIELD

This application relates to the field of autonomous driving, and more specifically, to a clock synchronization method and apparatus, and a vehicle.

### BACKGROUND

With development of autonomous driving technologies, an autonomous driving vehicle integrates many sensors and ECUs. Different data sources need to be converted to a unified time scale for comparison, analysis, calculation and the like. In engineering practice, it is often necessary to unify signals of a global navigation satellite system (global navigation satellite system, GNSS), an inertial measurement unit (inertial measurement unit, IMU), a vehicle status, and the like to a same time scale for calculation.

A GNSS clock is mainly used in existing autonomous driving. However, in a vehicle moving process, scenarios such as a tunnel or an underground garage are inevitable, and the GNSS signal is blocked. As a result, universal time coordinated (universal time coordinated, UTC) time cannot be received. When the GNSS signal recovers to perform time synchronization again, a time jump caused by the time synchronization affects autonomous driving application logic. However, at L3 and higher levels of the autonomous driving SAE, the autonomous driving has an external interaction requirement. Because time of a local (hardware real-time) clock cannot be close to the UTC time, it is inconvenient for external interaction. As a result, the local clock cannot be directly used in the autonomous driving. In partial existing autonomous driving, the GNSS clock and the local clock are used. Regardless of whether the GNSS clock is accurate, the local clock is synchronized based on the GNSS clock. In this manner, the time jump generated during time synchronization cannot be avoided, and impact on the autonomous driving application logic cannot be avoided.

Therefore, how to flexibly perform clock synchronization for autonomous driving to meet different requirements becomes an urgent problem to be resolved.
WO 2021/097718 A1 discloses a method and apparatus for providing a time source for automatic drive, which can be applied to automatic vehicle drive in the field of artificial intelligence. The method comprises: providing a first time source for a first subsystem of an automatic drive system by means of a first crystal oscillator, and providing a second time source for a second subsystem of the automatic drive system according to a received satellite time signal. Further prior is: HALEPLIDIS E ET AL: "Software-Defined Networking (SDN): Layers and Architecture Terminology; rfc7426.txt", SOFTWARE-DEFINED NETWORKING (SDN): LAYERS AND ARCHITECTURE TERMINOLOGY; RFC7426.TXT, INTERNET ENGINEERING TASK FORCE, IETF; STANDARD, INTERNET SOCIETY (ISOC) 4, RUE DES FALAISES CH- 1205 GENEVA, SWITZERLAND, 7 January 2015 (2015-01-07), pages 1-35; and

HACKEL TIMO ET AL: "Software-Defined Networks Supporting Time-Sensitive In-Vehicular Communication", 2019 IEEE 89TH VEHICULAR TECHNOLOGY CONFERENCE (VTC2019-SPRING), IEEE, 28 April 2019 (2019-04-28), pages 1-5, DOI: 10.1109/VTCSPRING.2019.8746473.

### SUMMARY

This application provides a clock synchronization method and apparatus, a controller, and a vehicle, so that clock synchronization is performed for autonomous driving to meet different requirements.

According to a first aspect, a time synchronization method is provided. The method is applied to a vehicle and includes: obtaining a first signal, where the first signal includes clock information of an external clock source; determining signal quality of the first signal; and determining a clock mode based on the signal quality of the first signal, where the clock mode includes a first clock mode or a second clock mode, and when the vehicle works in the first clock mode, the vehicle obtains first clock information from the external clock source, or when the vehicle works in the second clock mode, the vehicle obtains the first clock information and second clock information from the external clock source and an internal clock source respectively, where the internal clock source is located in the vehicle.

The first aspect is defined by claim 1.

Specifically, the vehicle includes a data plane clock and a management plane clock, and the first clock mode means that the data plane clock and the management plane clock use a same clock source. The second clock mode may mean that the data plane clock and the management plane clock use different clock sources.

Optionally, the external clock source may be a GNSS clock or a network time protocol (network time protocol, NTP) clock.

According to the method in this embodiment of this application, the clock mode may be determined based on the signal quality of the first signal, so that the first clock mode or the second clock mode may be configured for the autonomous driving algorithm based on different scenario requirements, to ensure stability of the autonomous driving algorithm application logic. In this way, hardware or software logic of a same domain controller can meet requirements of different clock schemes in different scenarios.

With reference to the first aspect, in some implementations of the first aspect, the determining a clock mode based on the signal quality of the first signal includes: when the signal quality of the first signal is greater than or equal to a first threshold, determining that the clock mode is the first clock mode; or when the signal quality of the first signal is less than the first threshold, determining that the clock mode is the second clock mode.

Specifically, the first threshold may represent a signal quality threshold of the first signal that may be obtained by the vehicle from the external clock source and that is used to provide stable clock information for autonomous driving.

In some possible implementations, when the signal quality of the first signal is greater than or equal to the first threshold and duration in which the signal quality of the first signal is greater than or equal to the first threshold is greater than or equal to first duration, it is determined that the clock mode is the first clock mode.

In some possible implementations, when the signal quality of the first signal is less than the first threshold and duration in which the signal quality of the first signal is less than the first threshold is greater than or equal to second duration, it is determined that the clock mode is the second clock mode.

With reference to the first aspect, in some implementations of the first aspect, the clock mode is the second clock mode, and the method further includes: synchronizing a management plane clock based on the first clock information, and synchronizing a data plane clock based on the second clock information.

Specifically, when the clock mode is the second clock mode, the management plane clock is synchronized based on the first clock information obtained from the external clock source, and the data plane clock is synchronized based on the second clock information obtained from the internal clock source. The data plane clock and the management plane clock are synchronized based on the first clock information obtained from the external clock source and the second clock information obtained from the internal clock source, respectively. Therefore, the data plane clock and the management plane clock may be synchronized or may not be synchronized. Optionally, the second clock mode may include a dual-clock synchronization mode or a dual-clock asynchronization mode, where the dual-clock synchronization mode indicates synchronization between the data plane clock and the management plane clock, and the dual-clock asynchronization mode indicates asynchronous between the data plane clock and the management plane clock.

In this embodiment of this application, when the clock mode is the second clock mode, the data plane clock and the management plane clock may respectively obtain clock information from different clock sources, and respectively synchronize with the different clock sources, so that the data plane clock and the management plane clock may be synchronized or not synchronized. That is, the second clock mode may be the dual-clock synchronization mode or the dual-clock asynchronization mode, so that when the autonomous driving runs based on the second clock mode, requirements of different scenarios can be met.

With reference to the first aspect, in some implementations of the first aspect, the method further includes: synchronizing the data plane clock based on the management plane clock.

Specifically, the data plane clock is synchronized based on the management plane clock, so that the management plane clock and the data plane clock are synchronized, that is, the second clock mode may be the dual-clock synchronization mode.

With reference to the first aspect, in some implementations of the first aspect, before the synchronizing the data plane clock based on the management plane clock, the method further includes: determining that the vehicle needs to communicate with an external device.

Optionally, if the vehicle needs to communicate with the external device, it may be determined that the second clock mode is the dual-clock synchronization mode, to meet a requirement for external interaction. Alternatively, if the vehicle does not need to communicate with the external device, it is determined that the second clock mode is the dual-clock asynchronization mode, so that the autonomous driving can run based on the internal clock source when the vehicle has no external interaction requirement, and a time jump of the data plane clock can be avoided, thereby ensuring stable running of the autonomous driving.

With reference to the first aspect, in some implementations of the first aspect, before the synchronizing the data plane clock based on the management plane clock, the method further includes: determining that a time difference between the data plane clock and the management plane clock is greater than or equal to a second threshold.

Specifically, the second threshold may indicate a threshold of a time difference whether the data plane clock and the management plane clock are in a synchronous state. For example, if the time difference between the data plane clock and the management plane clock is greater than or equal to the second threshold, it indicates that the data plane clock and the management plane clock are no longer in the synchronization state. If the time difference between the data plane clock and the management plane clock is less than the second threshold, it indicates that the data plane clock and the management plane clock are in the synchronization state.

In this embodiment of this application, before synchronizing the data plane clock based on the management plane clock, a value relationship between the time difference between the data plane clock and the management plane clock and the second threshold is determined, so that excessively frequent synchronization of the data plane clock based on the management plane clock can be avoided, and resource consumption caused by the time synchronization can be reduced.

With reference to the first aspect, in some implementations of the first aspect, before the synchronizing the data plane clock based on the management plane clock, the method further includes: determining that a vehicle speed of the vehicle is less than or equal to a third threshold.

Specifically, the third threshold may indicate a maximum vehicle speed that can allow a time jump in the autonomous driving in the current scenario. In other words, when the vehicle speed of the vehicle is less than or equal to the third threshold, the autonomous driving may run normally even if there is the time jump.

In this embodiment of this application, before synchronizing the data plane clock based on the management plane clock, it is determined that the vehicle speed of the vehicle is less than or equal to the third threshold, so that when the data plane clock is synchronized based on the management plane clock, even if there is the time jump, stable running of the autonomous driving can be ensured.

With reference to the first aspect, in some implementations of the first aspect, before the synchronizing the data plane clock based on the management plane clock, the method further includes: determining that the vehicle is taken over.

In this embodiment of this application, before the data plane clock is synchronized based on the management plane clock, because the vehicle is in a takeover state, when the data plane clock is synchronized based on the management plane clock, even if autonomous driving application logic is disordered or the autonomous driving crashes due to a time jump, safe and stable running of the vehicle can still be ensured.

With reference to the first aspect, in some implementations of the first aspect, the method further includes: determining the external clock source based on an environment in which the vehicle is located.

Specifically, the external clock source may be a GNSS clock or an NTP clock. The environment in which the vehicle is located may be an environment in which the vehicle is currently located or an environment in which the vehicle is about to be located.

With reference to the first aspect, in some implementations of the first aspect, the determining the external clock source based on an environment in which the vehicle is located includes: When the vehicle is located on an open road or an entrance and exit between a tunnel and an open road, determining that the external clock source is a GNSS clock; or when the vehicle is in a tunnel, under a bridge, or in an underground garage, determining that the external clock source is an NTP clock.

In this embodiment of this application, the external clock source is determined based on an environment in which the vehicle is located, and a clock source with more accurate time can be selected for the management plane clock, to avoid impact on autonomous driving application logic because the management plane clock cannot obtain accurate time information from a clock source of the management plane clock.

With reference to the first aspect, in some implementations of the first aspect, the vehicle includes a first apparatus and a second apparatus, and both the first apparatus and the second apparatus include the data plane clock and the management plane clock; the synchronizing the data plane clock based on the management plane clock includes: synchronizing the data plane clock of the first apparatus based on the management plane clock of the first apparatus; and the method further includes: backing up data of the first apparatus to the second apparatus; and controlling, by the second apparatus, travelling of the vehicle based on the backed-up data of the first apparatus.

In this embodiment of this application, the data of the first apparatus that controls travelling of the vehicle is backed up to the second apparatus, and the second apparatus controls travelling of the vehicle, so that when the data plane clock of the first apparatus is synchronized based on the management plane clock of the first apparatus, a time jump caused by clock synchronization can be prevented from affecting autonomous driving, and stable running of the autonomous driving can be ensured.

With reference to the first aspect, in some implementations of the first aspect, in the first apparatus, after synchronization between the data plane clock of the first apparatus and the management plane clock of the first apparatus is completed, the method further includes: controlling, by the first apparatus, travelling of the vehicle.

In this embodiment of this application, the data of the second apparatus for controlling travelling of the vehicle is backed up to the first apparatus, and the first apparatus is switched back to control travelling of the vehicle, so that the apparatus with higher performance can control running of the vehicle. In this way, an autonomous driving algorithm can run more smoothly and efficiently.

With reference to the first aspect, in some implementations of the first aspect, after the controlling, by the first apparatus, travelling of the vehicle based on the backed-up data of the second apparatus, the method further includes: synchronizing the data plane clock of the second apparatus based on a management plane clock of the second apparatus.

In this embodiment of this application, after the first apparatus resumes controlling travelling of the vehicle, the second apparatus synchronizes the data plane clock based on the management plane clock of the second apparatus, so that when the apparatus for controlling the vehicle subsequently needs to be switched from the first apparatus to the second apparatus. In this way, impact on autonomous driving caused by asynchronization between the data plane clock of the second apparatus and the management plane clock can be avoided.

According to a second aspect, a time synchronization apparatus is provided, where the apparatus is used in a vehicle, and the apparatus includes an obtaining module and a processing module. The obtaining module is configured to obtain a first signal, where the first signal includes clock information of an external clock source. The processing module is configured to determine signal quality of the first signal; and the processing module is further configured to determine a clock mode based on the signal quality of the first signal, where the clock mode includes a first clock mode or a second clock mode, and when the vehicle works in the first clock mode, the vehicle obtains first clock information from the external clock source, or when the vehicle works in the second clock mode, the vehicle obtains the first clock information and second clock information from the external clock source and an internal clock source respectively, where the internal clock source is located in the vehicle.

With reference to the second aspect, in some implementations of the second aspect, the processing module is specifically configured to: when the signal quality of the first signal is greater than or equal to a first threshold, determine that the clock mode is the first clock mode; or when the signal quality of the first signal is less than the first threshold, determine that the clock mode is the second clock mode.

With reference to the second aspect, in some implementations of the second aspect, when the clock mode is the second clock mode, the processing module is further configured to: synchronize a management plane clock based on the first clock information and synchronize a data plane clock based on the second clock information.

With reference to the second aspect, in some implementations of the second aspect, the processing module is further configured to: synchronize the data plane clock based on the management plane clock.

With reference to the second aspect, in some implementations of the second aspect, the processing module is further configured to: before synchronizing the data plane clock based on the management plane clock, determine that the vehicle needs to communicate with an external device.

With reference to the second aspect, in some implementations of the second aspect, the processing module is further configured to: before synchronizing the data plane clock based on the management plane clock, determine that a time difference between the data plane clock and the management plane clock is greater than or equal to a second threshold.

With reference to the second aspect, in some implementations of the second aspect, the processing module is further configured to: before synchronizing the data plane clock based on the management plane clock, determine that a vehicle speed of the vehicle is less than or equal to a third threshold.

With reference to the second aspect, in some implementations of the second aspect, the processing module is further configured to: before synchronizing the data plane clock based on the management plane clock, determine that a user takes over the vehicle.

With reference to the second aspect, in some implementations of the second aspect, the processing module is further configured to: determine the external clock source based on an environment in which the vehicle is located.

With reference to the second aspect, in some implementations of the second aspect, the processing module is specifically configured to: when the vehicle is located on an open road or an entrance and exit between a tunnel and an open road, the processing module is configured to determine that the external clock source is a GNSS clock; or when the vehicle is in a tunnel, under a bridge, or in an underground garage, the processing module is configured to determine that the external clock source is a network time protocol NTP clock.

With reference to the second aspect, in some implementations of the second aspect, the processing module includes a first apparatus and a second apparatus, and both the first apparatus and the second apparatus include the data plane clock and the management plane clock; the processing module is specifically configured to synchronize the data plane clock of the first apparatus based on the management plane clock of the first apparatus; and the processing module is further configured to: back up data of the first apparatus to the second apparatus; and control travelling of the vehicle based on the backed-up data of the first apparatus by using the second apparatus.

With reference to the second aspect, in some implementations of the second aspect, the processing module is further configured to: after synchronization between the data plane clock of the first apparatus and the management plane clock of the first apparatus is completed, control travelling of the vehicle by using the first apparatus.

With reference to the second aspect, in some implementations of the second aspect, the processing module is further configured to: after controlling travelling of the vehicle by using the first apparatus, synchronize the data plane clock of the second apparatus based on the management plane clock of the second apparatus.

According to a third aspect, an apparatus is provided. The apparatus is used in a vehicle, and the apparatus includes a processor and a memory. The memory is configured to store program instructions, and the processor is configured to invoke the program instructions, the apparatus is enabled to perform the method according to the first aspect or any possible implementation of the first aspect.

According to a fourth aspect, a vehicle is provided, and the vehicle includes the apparatus according to the second aspect or the third aspect.

According to a non-claimed fifth aspect, a computer program product including instructions is provided. When the computer program product runs on a computer, the computer is enabled to perform the method according to the first aspect or any implementation of the first aspect.

According to a sixth aspect, a computer-readable storage medium is provided, where the computer-readable storage medium stores program instructions, and when the program instructions are run by a processor, a computer is enabled to perform the method according to the first aspect or any possible implementation of the first aspect.

According to a seventh aspect, a chip is provided. The chip includes a processor and a data interface. The processor reads, by using the data interface, instructions stored in a memory, to perform the method according to the first aspect or any possible implementation of the first aspect.

### BRIEF DESCRIPTION OF DRAWINGS

FIG. 1 is a functional block diagram of a vehicle according to an embodiment of this application;
FIG. 2 is a schematic diagram of a clock synchronization system architecture according to an embodiment of this application;
FIG. 3 is a schematic diagram of an implementation of a clock synchronization system architecture according to an embodiment of this application;
FIG. 4 is a flowchart of a clock synchronization method according to an embodiment of this application;
FIG. 5 is an example flowchart of a clock synchronization method according to an embodiment of this application;
FIG. 6A, FIG. 6B and FIG. 6C are an example flowchart of a method using a dual-clock synchronization mode according to an embodiment of this application;
FIG. 7 is an example flowchart of a method for synchronizing a management plane clock based on a data plane clock according to an embodiment of this application;
FIG. 8 is an example diagram of a structure of a time synchronization apparatus according to an embodiment of this application;
FIG. 9 is an example diagram of a structure of an apparatus according to an embodiment of this application; and
FIG. 10 is an example diagram of a computer program product according to a non-claimed embodiment of this application.

### DESCRIPTION OF EMBODIMENTS

The following describes technical solutions of this application with reference to accompanying drawings.

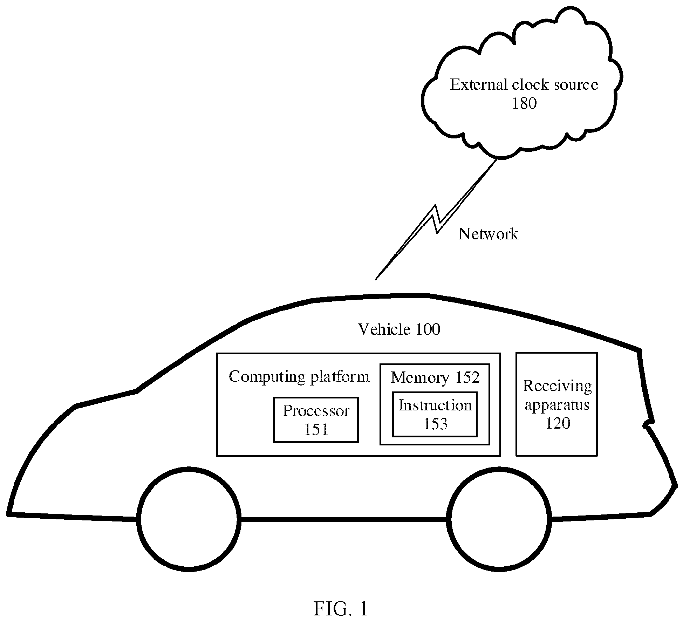

FIG. 1 shows an application scenario of a fault detection method according to an embodiment of this application. In this application scenario, a vehicle 100 and an external clock source 180 may be included. The vehicle 100 and the external clock source 180 may communicate with each other through a network.

Some or all functions of the vehicle 100 are controlled by a computing platform 150. The computing platform 150 may include at least one processor 151. The processor 151 may execute instructions 153 stored in a non-transitory computer-readable medium, for example, a memory 152.

In some embodiments, the computing platform 150 may alternatively be a plurality of computing devices that control individual components or subsystems of the vehicle 100 in a distributed manner. The processor 151 may be any conventional processor, for example, a central processing unit (central processing unit, CPU). Alternatively, the processor 151 may further include an image processor (graphic process unit, GPU), a field programmable gate array (field programmable gate array, FPGA), a system on chip (system on chip, SOC), an application-specific integrated circuit (application-specific integrated circuit, ASIC) or a combination thereof.

In addition to the instructions 153, the memory 152 may further store data, for example, a road map, route information, a position, a direction, a speed, and other such vehicle data of the vehicle, and other information. Such information may be used by the vehicle 100 and the computing platform 150 during operation of the vehicle 100 in autonomous, semi-autonomous and/or manual modes.

It should be understood that the structure of the vehicle in FIG. 1 should not be construed as a limitation on this embodiment of this application.

Optionally, the vehicle 100 may include one or more different types of transportation, and may also include one or more different types of transportation tools or movable objects that operate or move on land (for example, a highway, a road, or a railway), water surface (for example, a waterway, a river, or an ocean), or in space. For example, the vehicle may include an automobile, a bicycle, a motorcycle, a train, a subway, an airplane, a boat, an aircraft, a robot, another type of transport vehicle, a movable object, or the like. This is not limited in this embodiment of this application.

In addition, the application scenario shown in FIG. 1 may further include an external clock source 180, and the external clock source may be located in a network device, for example, a base station, a Wi-Fi, or a satellite. In this embodiment of this application, the external clock source may provide first clock information for the vehicle, and then perform an operation of an autonomous driving algorithm. This ensures work of the autonomous driving.

Correspondingly, the vehicle 100 may include a receiving apparatus 120, configured to receive clock information sent by the external clock source 180.

It should be understood that a GNSS in embodiments of this application refers to a satellite navigation system configured to provide positioning, navigation, and timing services on a global or regional basis, and may be a global system, for example, a global positioning system (global positioning system, GPS), a BeiDou navigation satellite system (BeiDou navigation satellite system, BDS), a Glonass system (GLONASS), a Galileo positioning system (Galileo positioning system, GALILEO), or global satellite navigation systems under development and in the future; or may be a regional system, for example, an Indian regional navigation satellite system (Indian regional navigation satellite system, IRNSS), a quasi-zenith satellite system (quasi-zenith satellite system, QZSS), or regional satellite navigation systems under development and in the future; or may be a related augmentation system, for example, a wide area augmentation system (wide area augmentation system, WAAS), a European geostationary navigation overlay service (European geostationary navigation overlay service, EGNOS), a multi-functional satellite augmentation system (multi-functional satellite augmentation system, MSAS), and related augmentation systems under development and in the future. This is not limited in this embodiment of this application.

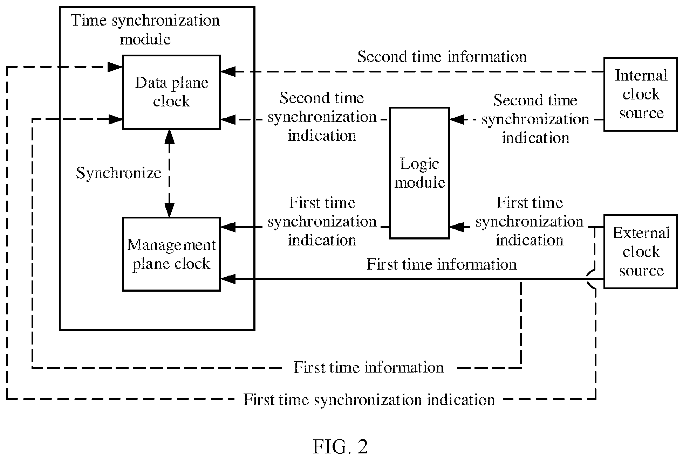

FIG. 2 is a schematic diagram of a clock synchronization system architecture according to an embodiment of this application. A data plane clock and/or a management plane clock may be synchronized by using the clock synchronization system architecture. As shown in FIG. 2, the system architecture includes an external clock source, an internal clock source, a logic module, and a time synchronization module. The time synchronization module includes a data plane clock and a management plane clock.

The external clock source refers to an external clock source located outside a vehicle, for example, a GNSS clock provided by a GNSS satellite or an NTP clock provided by a communication network, for example, a base station or Wi-Fi.

The internal clock source may be a local clock source, for example, a local hardware real-time clock (real-time clock, RTC) or an operating system clock.

The time synchronization module may implement synchronization between the data plane clock and the management plane clock. For example, time of the data plane clock is set to be the same as or similar to time of the management plane clock. The time synchronization module may be a control unit, for example, a microcontroller unit (microcontroller unit, MCU) or a SoC. There may be one or more time synchronization modules. This is not limited in embodiments of this application.

It should be understood that, based on different configurations, the data plane clock may be synchronized with the management plane clock, or may be not synchronized with the management plane clock.

The data plane clock is a clock configured to provide time data for data processing in autonomous driving algorithm logic, for example, a clock that may provide time data in a timestamp for sensor data.

The management plane clock is a clock configured to maintain, measure, and manage an autonomous driving system, for example, a clock configured to provide time information for printing and saving of an autonomous driving system log, or a clock configured to provide time information for data exchange between the autonomous driving system and an external device, for example, another vehicle, a base station, or a cloud control platform. For brevity, examples are not provided one by one herein.

It should be understood that the data plane clock and the management plane clock may be distinguished in terms of functions, or may be distinguished in terms of entities, that is, the data plane clock and the management plane clock may be two different clocks. Alternatively, a same clock may be used as the data plane clock to provide time data for data processing in the autonomous driving algorithm logic, and may be used as the management plane clock to maintain and manage the autonomous driving algorithm. This is not limited in this embodiment of this application.

The logical module may receive first clock information and second clock information that are provided by the external clock source and the internal clock source respectively, and send the clock information to the time synchronization module. Optionally, the first clock information and the second clock information may be sent to the data plane clock and the management plane clock respectively. The first clock information includes a first time synchronization indication and the first time information, and the second clock information includes a second time synchronization indication and the second time information. The first time synchronization indication indicates the management plane clock to synchronize with the external clock source based on the first time information. The second time synchronization indication indicates the data plane clock to synchronize with the internal clock source based on the second time information. For example, the first time synchronization indication and the second time synchronization indication may be pulse per second (pulse per second, PPS), and the pulse per second may be a high-level pulse signal. For example, pulse per second sent by the external clock source may indicate that the management plane clock synchronizes with the external clock source at a specific moment. The moment may be a rising edge phase, a high-level phase, a falling edge phase of the pulse, or a moment before and after the pulse. This is not limited in this embodiment of this application. It should be understood that the foregoing first time synchronization indication or second time synchronization indication indicating that the management plane clock and the data plane clock are respectively synchronized with the external clock source and the internal clock source are merely examples. This is not limited in embodiments of this application.

Optionally, the logic module may be a programmable logic device, and may be various chips or circuits that have a data processing function and are compatible with two PPS signals, such as a complex programmable logic device (complex programmable logic device, CPLD), an FPGA, or a digital signal processor (digital signal processor, DSP). This is not limited in embodiments of this application.

Optionally, the management plane clock may be synchronized with the external clock source. Specifically, the time synchronization module may obtain the first time information and the first time synchronization indication, and adjust the data plane clock based on the first time information and the first time synchronization indication. For example, the external clock source may send the first time information and the first time synchronization indication. The time synchronization module may obtain the first time information and the first time synchronization indication that are sent by the external clock source. After obtaining the first time information, the time synchronization module performs synchronize the management plane clock with the external clock source based on the first time synchronization indication. By using the foregoing method, the management plane clock may use the external clock source as a clock source of the management plane clock, so that synchronization between the management plane clock and the external clock source can be implemented.

It should be understood that the time synchronization module may directly obtain the first time information and/or the first time synchronization indication from the external clock source, or may obtain the first time information and/or the first time synchronization indication sent by the external clock source from another module. For example, the external clock source may send the first time synchronization indication to the logical module, and the time management module obtains the first time synchronization indication from the logical module. For another example, the external clock source may send the first time information and the first time synchronization indication to a first clock receiving module (not shown in FIG. 2), the first clock receiving module may send the first time synchronization indication to the logic module, or the first clock receiving module may send the first time information to the time synchronization module. The time synchronization module may obtain the first time synchronization indication and the first time information from the logic module and the first clock receiving module, respectively. For another example, the external clock source may send the first time information and/or the first time synchronization indication to the first clock receiving module, and the time synchronization module obtains the first time information and/or the first time synchronization indication from the first clock receiving module. It should be understood that, after receiving the first time information and/or the first time synchronization indication, another module may choose not to send the first time information and/or the first time synchronization indication to the time synchronization module. Therefore, the time synchronization module cannot obtain the first time information and/or the first time synchronization indication, and cannot synchronize the management plane clock with the external clock source. It should be understood that there may be one or more clock synchronization modules.

It should be understood that the foregoing method for synchronizing the management plane clock with the external clock source is merely an example. This is not limited in embodiments of this application.

Optionally, the data plane clock may be synchronized with the internal clock source. Specifically, the time synchronization module may obtain the second time information and the second time synchronization indication, and adjust the data plane clock based on the second time information and the second time synchronization indication. For example, the internal clock source may send the second time information and the second time synchronization indication. The time synchronization module may obtain the second time information and the second time synchronization indication that are sent by the internal clock source. After obtaining the second time information, the time synchronization module synchronizes the data plane clock with the internal clock source based on the second time synchronization indication. By using the foregoing method, the data plane clock may use the internal clock source as the clock source of the data plane clock, so that synchronization between the data plane clock and the internal clock source can be implemented.

It should be understood that the time synchronization module may directly obtain the second time information and/or the second time synchronization indication from the internal clock source, or may obtain the second time information and/or the second time synchronization indication sent by the internal clock source from another module. For example, the internal clock source may send the second time synchronization indication to the logical module, and the time management module obtains the second time synchronization indication from the logical module. It should be understood that, after receiving the second time information and/or the second time synchronization indication, the another module may choose not to send the second time information and/or the second time synchronization indication to the time synchronization module. Therefore, the time synchronization module cannot obtain the second time information and/or the second time synchronization indication, and cannot synchronize the data plane clock with the internal clock source.

It should be understood that the foregoing method for synchronizing the data plane clock with the internal clock source is merely an example. This is not limited in embodiments of this application.

For example, if the internal clock source does not send the second time information and/or the second time synchronization indication, the time synchronization module cannot obtain the second time information and/or the second time synchronization indication, the data plane clock cannot synchronize with the internal clock source. The data plane clock may obtain time information of the management plane clock and synchronize with the management plane clock, or the data plane clock may obtain the first time information and/or the first time synchronization indication from the external clock source, and synchronize with the external clock source, so as to keep stable running of the data plane clock. In the foregoing manner, the data plane clock and the management plane clock may use a same clock source. It should be understood that, because the data plane clock and the management plane clock are synchronized, the data plane clock and the management plane clock may alternatively be a same clock. The clock uses the internal clock source as a clock source, and may serve as both the data plane clock and the management plane clock. In other words, the time synchronization management module may obtain the second time information and the second time synchronization indication, set only one clock, and synchronize the clock with the internal clock source. The clock may be used as the data plane clock to provide time data for data processing in the autonomous driving algorithm logic, or may be used as the management plane clock to maintain and manage the autonomous driving algorithm. It should be understood that the foregoing manner of using the same clock source for the data plane clock and the management plane clock is merely an example. This is not limited in this application.

For example, if the internal clock source sends the second time information and/or the second time synchronization indication, after obtaining the second time information and/or the second time synchronization indication, the another module chooses not to send the second time information and/or the second time synchronization indication, the time synchronization module cannot obtain the second time information and/or the second time synchronization indication from the module. Consequently, the data plane clock cannot synchronize with the internal clock source. The data plane clock can obtain the time information of the management plane clock and synchronize with the management plane clock to ensure stable running of the data plane clock. In this manner, the data plane clock and the management plane clock may use the same clock source. For example, the internal clock source sends the second time information to the time synchronization module, and the internal clock source sends the second time synchronization indication to the logic module. After obtaining the second time synchronization indication from the internal clock source, the logic module chooses not to send the second time synchronization indication. In this case, the time synchronization module may obtain the second time information, but may not obtain the second time synchronization indication. Consequently, the data plane clock cannot be synchronized with the internal clock source. In this case, the data plane clock may obtain the time information from the management plane clock, and synchronize with the management plane clock. It should be understood that, because the data plane clock is synchronous with the management plane clock, and there is only one clock source, the data plane clock and the management plane clock may alternatively be the same clock, and the second clock is used as the clock source, and may be used as both the data plane clock and the management plane clock. Details are not described herein again. It should be understood that the foregoing manner of using the same clock source for the data plane clock and the management plane clock is merely an example. This is not limited in this application.

It should be understood that, because the data plane clock and the management plane clock may use different clock sources, the data plane clock and the management plane clock may not be synchronized. Because the time synchronization module can implement synchronization between the data plane clock and the management plane clock, the data plane clock and the management plane clock may be synchronized.

According to the system architecture in this embodiment of this application, the data plane clock and the management plane clock may use a same clock source. The data plane clock and the management plane clock may alternatively use different clock sources and be synchronized. Alternatively, the data plane clock and the management plane clock may use different clock sources and remain asynchronous. In other words, a plurality of different clock schemes may be implemented based on the system architecture in embodiments of this application.

It should be understood that the foregoing is merely used as an implementation. In an actual operation, it may be determined with reference to an actual situation. This is not limited herein.

It should be understood that the foregoing module may be a hardware module in a hardware device, may be a software module running on dedicated hardware, or may be a virtualization module instantiated on a platform (for example, a cloud platform). Optionally, the foregoing module may be implemented by one device, or may be jointly implemented by a plurality of devices, or may be implemented by a functional module in one device. This is not specifically limited in embodiments of this application.

It should be understood that the foregoing system architecture applied to embodiments of this application is merely an example of a system architecture described from a perspective of clock synchronization of autonomous driving, and a system architecture applicable to embodiments of this application is not limited thereto. Any system architecture that can implement functions of the foregoing modules is applicable to embodiments of this application.

In this embodiment of this application, synchronization between the management plane clock and the first clock may be implemented based on the first time information, or synchronization between the data plane clock and the second clock may be implemented based on the second time information. Therefore, during running of the autonomous driving algorithm, a plurality of different clock schemes may be used based on different requirements. In this way, different requirements such as stable running and external interaction of the autonomous driving algorithm are met.

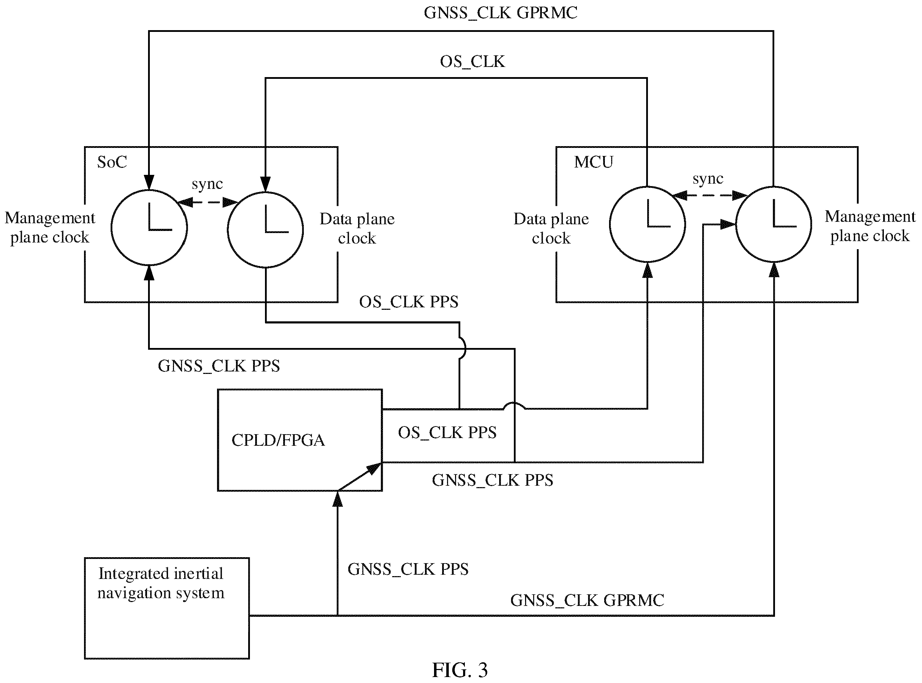

For example, for ease of understanding, FIG. 3 is a schematic diagram of an implementation of a clock synchronization system architecture. A CPLD is used as an example of a logic module, an MCU is used as an example of a first time synchronization module, a SoC is used as an example of a second time synchronization module, a GNSS clock (GNSS clock, GNSS_CLK) is used as an example of an external clock source, an operating system clock (operating system clock, Os_CLK) is used as an example of an internal clock source, correspondingly, GNSS_CLK PPS is used as an example of a first time synchronization indication, and an integrated inertial navigation system is used as an example of a first clock receiving module. The first clock receiving module is configured to receive first time information and a first time synchronization indication that are sent by an external clock source. The first time information may be included in a GNSS_CLK GPRMC message. Os_CLK PPS is used as an example of a second time synchronization indication. Methods for data plane clock synchronization and management plane clock synchronization of the MCU in the system architecture are separately described.

For example, the following describes a method for synchronizing the management plane clock with the external clock source according to the system architecture in this embodiment of this application.

As shown in FIG. 3, after receiving time information of the GNSS_CLK, the integrated inertial navigation system sends a PPS signal of the GNSS_CLK every second, that is, the GNSS_CLK PPS to the CPLD. After receiving the GNSS_CLK PPS, the CPLD may send the PPS to the MCU, where the PPS may indicate a moment at which the management plane clock is synchronized with the GNSS clock. For example, the management plane clock may be synchronized with the GNSS clock at the moment at which the GNSS_CLK PPS is received. It should be understood that: The foregoing moment of synchronization between the management plane clock and the GNSS clock is merely an example for description. This is not limited in this embodiment of this application.

The integrated inertial navigation system may send a GPRMC message corresponding to the GNSS_CLK PPS to the MCU, where the GPRMC message may include time information of the GNSS clock, that is, the first time information, and GNSS status information. The GNSS status information may indicate whether a positioning status of the GNSS is valid. For example, when a quantity of satellites above a current antenna view is greater than or equal to 3, or when a quantity of satellites in use by the GNSS is greater than or equal to 3, it is considered that positioning of the GNSS is valid, that is, valid positioning may be obtained based on the current GNSS, or a GNSS status is valid. When the quantity of satellites above the current antenna view is less than 3, or when the quantity of satellites in use by the GNSS is less than 3, it is considered that GNSS positioning is invalid, that is, valid positioning cannot be obtained based on the current GNSS, or the GNSS status is invalid. It should be understood that the foregoing relationship between the GNSS status and the quantity of satellites above the current antenna view is merely an example for description. This is not limited in this embodiment of this application.

The MCU can obtain the time information of the GNSS clock and the GNSS status information from the GPRMC message. If the GNSS status is invalid, the MCU can stop synchronizing the management plane clock with the external clock source. If the GNSS status is valid, the MCU may synchronize the management plane clock based on the GNSS clock. For example, the MCU may adjust time of the management plane clock in the MCU by using the time information of the GNSS clock in the GPRMC message. For another example, the MCU may adjust the time of the management plane clock in the MCU by using integer second information of the time of the GNSS clock in the GPRMC message and delay information, where the delay information may be preset in a system configuration, or may be obtained through calculation based on a vehicle status. This is not limited in this application. It should be understood that the foregoing management plane clock synchronization manner is merely an example for ease of description. This is not limited in this embodiment of this application.

For example, the following describes a method for synchronizing the data plane clock with the internal clock source according to the system architecture in this embodiment of this application.

As shown in FIG. 3, after the CPLD is started, based on a local crystal oscillator, the CPLD can output Os_CLK pulse per second every second, that is, Os_CLK_PPS, to the MCU and SoC. A moment at which the CPLD sends Os_CLK_PPS may be the same as or different from a moment at which the CPLD sends GNSS_CLK_PPS. This is not limited in this embodiment of this application.

After receiving Os_CLK PPS sent by the CPLD, the MCU may synchronize the data plane clock with the Os_CLK. For example, the MCU may adjust the time of the data plane clock in the MCU by using Os_CLK time information. For another example, the MCU may adjust the time of the data plane clock in the MCU by using integer second information of Os_CLK time and delay information. The integer second information of the Os_CLK time may be obtained by rounding off a non-integral second of the Os_CLK time, that is, when the non-integral second part of the Os_CLK time is less than 500 ms, an integer second value of the Os_CLK time is used. When the non-integral second part of the Os_CLK time is greater than or equal to 500 ms, the integer second value of the Os_CLK time plus 1 is used. The delay information may be preset in a system configuration, or may be obtained through calculation based on a vehicle status. This is not limited in this embodiment of this application.

It should be understood that the data plane clock in the MCU may be fine-tuned along with Os_CLK_PPS sent by the CPLD.

It should be understood that, when the CPLD does not send the Os_CLK pulse per second to the MCU, the data plane clock may not be synchronized with Os_CLK. Based on the system configuration, the data plane clock may obtain time information from the management plane clock, synchronize with the management plane clock, and then, synchronize with the GNSS clock. Alternatively, the data plane clock may obtain time information from the GNSS clock, to synchronize with the GNSS clock. Alternatively, the data plane clock and the management clock may be a same clock, and the clock is synchronized with the GNSS clock. The foregoing method for synchronizing the data plane clock with the GNSS clock is merely an example for ease of description. This is not limited in this embodiment of this application.

It should be understood that, based on the system architecture in this embodiment of this application, the data plane clock and the management plane clock may use a same clock source, for example, the GNSS clock source. Alternatively, the data plane clock and the management plane clock may use different clock sources. It should be understood that, because the data plane clock and the management plane clock in the MCU may use different clocks as clock sources of the data plane clock and the management plane clock, the data plane clock and the management plane clock may be synchronized or may not be synchronized. For example, the data plane clock and the management plane clock respectively use different clocks as clock sources of the data plane clock and the management plane clock and keep synchronization. For example, the data plane clock uses Os_CLK as a clock source, the management plane clock uses GNSS_CLK as a clock source, and the data plane clock is synchronized with the management plane clock, that is, a synchronization mode of the data plane clock and the management plane clock is determined as synchronization. Alternatively, the data plane clock and the management plane clock may use different clock sources and are not synchronized. For example, the data plane clock uses Os_CLK as the clock source, the management plane clock uses GNSS_CLK as the clock source, and the data plane clock and the management plane clock are not synchronized, that is, the synchronization mode of the data plane clock and the management plane clock is determined as asynchronous. It should be understood that a plurality of different clock schemes may be implemented based on the system architecture in embodiments of this application.

It should be understood that, if there are a plurality of time synchronization modules, management plane clock synchronization and data plane clock synchronization manners of the plurality of time synchronization modules may be similar to that of the MCU. For example, data plane clock synchronization and management plane clock synchronization of the second clock synchronization module SoC are similar to those of the first clock synchronization module MCU. For brevity, details are not described herein again.

It should be understood that the foregoing is merely used as an implementation of a time synchronization system architecture. In an actual operation, it may be determined with reference to an actual situation. This is not limited herein.

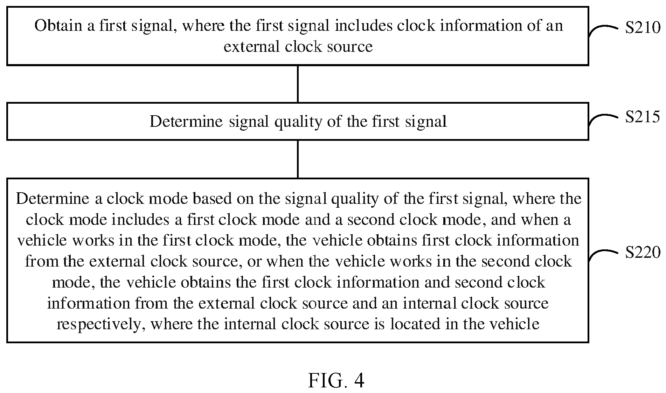

FIG. 4 is a flowchart of a clock synchronization method according to an embodiment of this application. The method 200 includes steps S210 to S220. The following describes in detail the steps of the method S200.

S210: Obtain a first signal, where the first signal includes clock information of an external clock source.

Specifically, the external clock source may be a GNSS clock or an NTP clock. When the external clock source is the GNSS clock, the first signal may be a GNSS signal. A vehicle may obtain the GNSS signal from a global navigation satellite system, and the signal includes clock information of the GNSS clock. When the external clock source is the NTP clock, the first signal may be a moving signal. The vehicle may obtain the moving signal from a network device, for example, a base station or Wi-Fi. The signal includes clock information of the NTP clock.

It should be understood that the first signal may be obtained by using a receiving module, for example, an antenna, a signal receiving unit, or an external device. The external device may be an inertial navigation system, a telematics box (telematics box, T-BOX), or the like. This is not limited in this application.

S215: Determine signal quality of the first signal.

Specifically, signal quality of the first signal may be determined based on the obtained first signal.

Optionally, the signal quality of the first signal may be a signal strength of the first signal, or may be a signal-to-noise ratio of the first signal, or may be another indicator used to represent the signal quality of the first signal.

It should be understood that the signal quality of the first signal may be evaluated by using one or more signal parameters. For example, a signal strength is used to represent the signal quality of the GNSS signal, or a plurality of signal parameters may be used to represent the signal quality of the GNSS signal. For example, the signal strength, the GNSS status, and the signal-to-noise ratio are used to evaluate the quality of the GNSS signal. In other words, the signal quality of the GNSS signal may be evaluated by using the one or more GNSS signal parameters. This is not limited in this embodiment of this application.

S220: Determine a clock mode based on the signal quality of the first signal, where the clock mode includes a first clock mode and a second clock mode, and when the vehicle works in the first clock mode, the vehicle obtains first clock information from the external clock source, or when the vehicle works in the second clock mode, the vehicle obtains the first clock information and second clock information from the external clock source and an internal clock source respectively, where the internal clock source is located in the vehicle.

It should be understood that the first clock mode means that the data plane clock and the management plane clock use a same clock source. Specifically, the data plane clock and the management plane clock use the external clock source as a clock source. For example, both the data plane clock and the management plane clock use the GNSS clock as a clock source. The second clock mode means that the data plane clock and the management plane clock use different clock sources. Specifically, the clock source of the management plane clock is the external clock source, the external clock source may be the GNSS clock or the NTP clock, and the clock source of the data plane clock is the internal clock source, where the internal clock source may be a local hardware real-time clock.

It should be understood that the first clock mode means that the data plane clock and the management plane clock use a same clock source, and may mean that in the time synchronization module, a same clock is used as the data plane clock to provide time data for data processing in the autonomous driving algorithm logic, and as the management plane clock to manage and maintain the autonomous driving algorithm, and the clock uses the external clock source as the clock source; or may mean that in the time synchronization module, two clocks are used as the data plane clock and the management plane clock, respectively, and the data plane clock and the management plane clock use the same clock source.

Optionally, the clock mode may be determined based on a system configuration. For example, when the autonomous driving is started for the first time, the clock mode may be determined based on a default clock scheme configured in a system.

It should be understood that, based on the system configuration, it is determined that the clock mode is the first clock mode or the second clock mode when the signal quality does not need to be confirmed. For example, it may be determined based on a system configuration that the clock mode is the first clock mode or the second clock mode, so that the autonomous driving can run in only the first clock mode or the second clock mode without confirming the signal quality of the first signal or adjusting the clock mode based on a change of the signal quality of the first signal. The system configuration may indicate a clock scheme of the vehicle, that is, indicate the vehicle to travel in the first clock mode or the second clock mode. It should be understood that the foregoing manner of determining the clock mode based on the system configuration is merely an example, and this is not limited in this application.

Optionally, when the signal quality of the first signal is greater than or equal to the first threshold, it is determined that the clock mode is the first clock mode. The first threshold indicates a threshold of the signal quality of the first signal that can provide stable clock information for autonomous driving.

It should be understood that when a signal parameter is used to represent the first signal, the first threshold may be a threshold related to the indicator. For example, when a signal strength is used to represent the signal quality of the GNSS signal, the first threshold may be -130 dBm. When the signal strength is used to represent the mobile signal sent by the base station, the first threshold may be -90 dBm. When a plurality of signal parameters are used to represent the GNSS signal or a radio signal sent by the base station, the first threshold may be thresholds related to the plurality of signal parameters. For example, when a signal strength and a signal-to-noise ratio are used to represent the signal quality of the GNSS signal, a corresponding first threshold may be that the signal strength is -130 dBm and the SNR is 70 dB, or may be score values for scoring different parameters. It should be understood that the foregoing example of the first threshold is merely for ease of understanding, and this is not limited in this embodiment of this application.

For example, when the signal strength of the first signal is greater than or equal to the first threshold, it is determined that the clock mode is the first clock mode. For example, when the signal strength of the obtained GNSS signal is not less than -130 dBm, it is considered that the GNSS signal quality is good to provide a stable signal for autonomous driving, and it may be determined that the clock mode is the first clock mode. For another example, when the signal strength of the obtained GNSS signal is less than -130 dBm in some time periods, but duration in which the GNSS strength signal is less than -130 dBm is less than 200 ms, it is considered that the GNSS signal quality is good to provide a stable signal for autonomous driving, and it may be determined that the clock mode is the first clock mode.

For example, if GNSS signals sent by a plurality of satellites are obtained, when signal strengths of GNSS signals sent by more than a specified quantity of satellites are received and all of them are greater than a specified GNSS signal strength threshold, it is determined that the clock mode is the first clock mode. For example, if GNSS signals sent by 10 satellites are obtained, and signal strengths of GNSS signals sent by greater than or equal to 5 of the 10 satellites is not less than -130 dBm, it is considered that good GNSS quality can provide stable signal for autonomous driving. That is, in this case, the first threshold may be understood as that the signal strengths of the GNSS signals sent by the five satellites are not less than -130 dBm. When the signal quality of the GNSS signal is greater than or equal to the first threshold, it is determined that the clock mode is the first clock mode.

For example, when the GNSS status is valid, or the quantity of satellites above the current antenna view is greater than or equal to the first threshold, it is determined that the clock mode is the first clock mode. For example, if the quantity of satellites above the current antenna view is not less than 5, that is, when the current quantity of satellites is not less than 5, it is considered that the current GNSS may provide a valid signal for autonomous driving, and the clock mode may be set to the first clock mode.

For example, when the signal-to-noise ratio of the GNSS signal is not less than the first threshold, it is determined that the clock mode is the first clock mode. For example, when the signal-to-noise ratio is not less than 70 dB, it is considered that the current GNSS may provide a stable signal for autonomous driving, and the clock mode may be set to the first clock mode.

For example, when a difference between a time period between GNSS signal update moments and a standard time period consecutively exceeds a specified threshold for a plurality of times, it is determined that the clock mode is the first clock mode. For example, for a GNSS signal whose update frequency is 1 Hz, a time difference between a time period (for example, 1.02s) between two GNSS signal update moments and a standard GNSS signal update time period (for example, 1s) is less than a specified threshold (for example, 0.05s) for a plurality of consecutive times (for example, three consecutive times), it is considered that the current GNSS can provide a stable signal for autonomous driving, and the clock mode may be set to the first clock mode. For brevity, examples are not provided one by one.

It should be understood that different first thresholds may be set based on different requirements of the autonomous driving algorithm for GNSS signal quality, and the clock mode is determined based on the first threshold.

It should be understood that the external clock source may be determined based on the signal quality of the first signal. For example, when the signal strength of the first signal is greater than the first threshold, the autonomous driving is performed in the first clock mode, and when the signal strength of the first signal is less than a clock signal switching threshold, the clock source may be switched. The clock signal switching threshold may indicate a threshold used to determine the signal quality of the first signal of the external clock source when the vehicle travels in the first clock mode. It should be understood that the clock signal switching threshold is greater than the first threshold. For example, the external clock source may be switched from the GNSS clock to the NTP clock if the vehicle travels in the first clock mode, the current external clock source is the GNSS clock, the first signal is a GNSS signal, a signal strength (for example, -123 dBm) of the GNSS signal is higher than a first threshold (for example, -130 dBm) and less than a corresponding clock signal switching threshold (for example, -120 dBm), a signal strength (for example, -80 dBm) of the mobile signal currently obtained by the vehicle from the base station is higher than a corresponding clock signal switching threshold (for example, -83 dBm) and is also higher than a corresponding first threshold (for example, -90 dBm) when the signal is used as the first signal. For brevity, examples are not provided one by one. According to this method, a more accurate clock can be provided for the first clock mode, to ensure stable running of the autonomous driving.

Optionally, the external clock source may be determined based on the signal quality of the first signal and an environment in which the vehicle is located. For example, when the vehicle travels in the first clock mode on an urban open road and is to enter an underground garage subsequently, the current external clock source of the vehicle is a GNSS clock. The corresponding first signal is a GNSS signal, and a signal strength (for example, -120 dBm) is higher than a first threshold (for example, -130 dBm). If a signal strength (for example, -80 dBm) of the mobile signal obtained by the vehicle from the base station is greater than a corresponding first threshold (for example, -90 dBm) when the signal is used as the first signal, because the vehicle cannot obtain a stable GNSS signal in the underground garage, the external clock source may be switched from the GNSS clock to the NTP clock to ensure smooth autonomous driving running after the vehicle enters the underground garage. It should be understood that the environment in which the vehicle is located may be determined based on image information obtained by the vehicle, an obtained GNSS signal, or interaction between the vehicle and the outside. In this manner, a more accurate clock may be provided for the first clock mode, to ensure stable running of the autonomous driving.

Optionally, when the quality of the GNSS signal is less than the first threshold, it is determined that the clock mode is the second clock mode.

For example, when the GNSS signal strength is less than the first threshold, for example, when the GNSS signal strength is less than -130 dBm, it is determined that the clock mode is the second clock mode. Details are not described herein again.

For example, when the GNSS status is invalid, or when the quantity of satellites above the current antenna view is less than the first threshold, for example, when the quantity of satellites above the current antenna view is less than 3, it is determined that the clock mode is the dual-clock mode.

For example, when the signal-to-noise ratio of the GNSS signal is less than the first threshold, for example, when the signal-to-noise ratio of the GNSS signal is less than 70 dB, it is determined that the clock mode is the dual-clock mode.

It should be understood that, when the signal quality of the first signal obtained by the vehicle changes, the clock mode may be correspondingly adjusted. For example, when the vehicle travels in the first clock mode, if the signal quality of the GNSS signal obtained by the vehicle changes from being greater than or equal to the first threshold to being less than the first threshold, for example, when the signal strength of the GNSS signal changes from -120 dBm to -135 dBm and the corresponding first threshold is -130 dBm, correspondingly, the clock mode may be adjusted from the first clock mode to the second clock mode, and the vehicle may subsequently travel in the second clock mode. For brevity, examples are not provided one by one. It should be understood that the foregoing method for adjusting the clock mode based on the signal quality of the first signal is merely an example. This is not limited in this embodiment of this application.

It should be understood that the foregoing method for determining the clock mode based on the first threshold is merely an example. This is not limited in this application.

It should be understood that, after the clock mode is determined, the data plane clock and the management plane clock are synchronized with respective clock sources of the data plane clock and the management plane clock.

It should be understood that the data plane clock and the management plane clock may be synchronized with the clock sources of the data plane clock and the management plane clock based on the time synchronization system architecture in this embodiment of this application. Details are not described herein again.

According to the method in this embodiment of this application, the clock mode may be determined based on the signal quality of the first signal, so that the vehicle can travel in the first clock mode or the second clock mode based on different scenario requirements, to ensure stability of the autonomous driving algorithm application logic. In this way, hardware or software logic of a same domain controller can meet requirements of different clock schemes in different scenarios.

It should be understood that in this embodiment of this application, when the quality of the first signal is good, it is determined that the clock mode is the first clock mode, so that clock synchronization logic can be simplified when clock information provided by the first signal is sufficient to maintain stability of the autonomous driving algorithm application logic, and energy and computing resource dissipation caused by clock synchronization can be reduced. When the signal quality of the first signal is poor, it is determined that the clock mode is the second clock mode, so that a time jump due to the poor signal quality of the first signal when only the external clock source is used as the clock source can be avoided, and autonomous driving algorithm application logic can be kept stable.

Optionally, the second clock mode includes a dual-clock synchronization mode and a dual-clock asynchronization mode. It may be determined that the second clock mode is the dual-clock synchronization mode or the dual-clock asynchronization mode based on whether external interaction is performed. The dual-clock synchronization mode means that the data plane clock may be synchronized based on the management plane clock, so that the data plane clock and the management plane clock are synchronized. The dual-clock asynchronization mode means that the data plane clock and the management plane clock may not be synchronized. External interaction refers to interaction between the vehicle and another device, for example, with another vehicle (vehicle to vehicle, V2V), with an infrastructure (vehicle to infrastructure, V2I), or with a cloud control platform (vehicle to cloud, V2C) for communication.

In this embodiment of this application, when there is no external interaction requirement, it may be determined that the second clock mode is the dual-clock asynchronization mode, so that synchronization may not be performed between the data plane clock and the management plane clock. Therefore, when the signal quality of the first signal is poor, the time jump caused by synchronization between the management plane clock and the external clock source is prevented from affecting the data plane clock, to avoid impact of the time jump on the autonomous driving application logic, and maintain stable running of the autonomous driving. When there is a requirement for external interaction, it may be determined that the second clock mode is the dual-clock synchronization mode, and the data plane clock is synchronized with the management plane clock, so that the requirement for external interaction of the autonomous driving can be met. The second clock mode is differentiated into the dual-clock synchronization mode or the dual-clock asynchronization mode, so that the vehicle can determine a more reasonable clock scheme according to different requirements.

It should be understood that it may be determined that the second clock mode is the dual-clock synchronization mode or the dual-clock asynchronization mode based on a system configuration. For example, when autonomous driving is started for the first time, it may be determined that the second clock mode is the dual-clock synchronization mode or the dual-clock asynchronization mode based on a default clock scheme configured in a system.

It should be understood that, based on the system configuration, it is determined that the second clock mode is the dual-clock synchronization mode or the dual-clock asynchronization mode without confirming the requirement for external interaction. For example, it may be determined, based on the system configuration, that the second clock mode is the dual-clock synchronization mode or the dual-clock asynchronization mode, so that the vehicle may not need to determine the signal quality of the first signal and the requirement for external interaction. Alternatively, when the second clock mode does not need to be adjusted to the dual-clock synchronization mode or the dual-clock asynchronization mode based on a change in the external requirement, only the dual-clock synchronization mode or the dual-clock asynchronization mode is used, where the system configuration may indicate a clock scheme of the vehicle, and may indicate that the vehicle travels in the dual-clock synchronization mode or the dual-clock asynchronization mode. It should be understood that the foregoing manner of determining the clock mode based on the system configuration is merely an example, and this is not limited in this application.

It should be understood that synchronization between the data plane clock and the management plane clock may mean that time of the data plane clock and time of the management plane clock are exactly the same, or may mean that a time difference between the data plane clock and the management plane clock is within a small range. For example, when the time difference between the data plane clock and the management plane clock is within a second threshold, it is considered that the data plane clock and the management plane clock are synchronized.

Optionally, in the dual-clock synchronization mode, the external clock source may be determined based on an environment in which the vehicle is located. In other words, the clock source of the management plane clock in the dual-clock synchronization mode may be determined based on a vehicle travelling scenario.

For example, the environment in which the vehicle is located may be determined based on image data obtained by the vehicle. The environment in which the vehicle is located may be determined based on the obtained GNSS signal. The environment in which the vehicle is located may be determined based on the obtained interaction between the vehicle and the outside (vehicle to everything, V2X). The driving scenario of the vehicle may alternatively be determined based on other obtained information. It should be understood that the foregoing method for determining the environment in which the vehicle is located is merely an example for ease of description. This is not limited in this embodiment of this application.

Optionally, the scenario management module may determine the environment in which the vehicle is located. The scenario management module determines, based on the obtained information, a driving scenario of the vehicle, that is, the environment in which the vehicle is located. For example, the scene management module may determine the environment in which the vehicle is located based on one or more of image data, a GNSS signal, or information about interaction between the vehicle and the outside, or may determine the environment in which the vehicle is located in another manner, for example, through a detection result of a vehicle-mounted radar. It should be understood that the foregoing method for determining the vehicle travelling scenario by the scenario management module is merely an example. This is not limited in this embodiment of this application.

For example, determining the external clock source, that is, the clock source of the management plane clock, based on the environment in which the vehicle is located may be determining the clock source of the management plane clock based on the current environment in which the vehicle is located. For example, when the vehicle is on an urban open road, it is considered that the GNSS signal in the environment in which the vehicle is currently located can provide clock information, and it is determined that the external clock source is the GNSS clock. Alternatively, when the vehicle is located in an underground garage, it is considered that the GNSS signal cannot provide stable clock information under the current environment of the vehicle, and it is determined that the external clock source is the NTP clock. Alternatively, when the vehicle is in a tunnel or under a bridge, it is determined that the external clock source is the NTP clock. Alternatively, when the vehicle is at an entrance and exit between a tunnel and an open road, it is determined that the external clock source is the NTP clock. Alternatively, when the vehicle is located in an indoor parking lot, it is determined that the external clock source is the NTP clock. Alternatively, when the vehicle is in an open parking lot, it is determined that the external clock source is a GNSS clock. Alternatively, when the vehicle is in another scenario, it may be determined that the external clock source is the GNSS clock or the NTP clock. The foregoing manner of determining the external clock source based on the current environment of the vehicle is merely an example. This is not limited in this embodiment of this application.

For example, determining the clock source of the management plane clock based on the environment in which the vehicle is located may alternatively be determining the external clock source based on an environment in which the vehicle is to be located in the future. For example, when the vehicle is on an urban open road and is to enter an underground garage subsequently, when the vehicle is on the urban open road before entering the underground garage, the external clock source may be adjusted from the GNSS clock to the NTP clock, so as to meet the requirement for smooth running of an autonomous driving function after the vehicle enters the underground garage, and avoid impact of the time jump caused by improper clock synchronization on the autonomous driving application logic. The foregoing manner of determining the external clock source based on the environment in which the vehicle is to be located in the future is merely an example. This is not limited in this embodiment of this application.

In this embodiment of this application, the external clock source is determined, and a better clock source can be selected for the management plane clock, to avoid impact on the autonomous driving application logic because the management plane clock cannot obtain accurate time information from the clock source of the management plane clock.

Optionally, if the second clock mode is the dual-clock synchronization mode, the management plane clock may be used to synchronize the data plane clock based on the second threshold. Specifically, if the time difference between the data plane clock and the management plane clock is greater than a second threshold time_gap, the management plane clock is used to synchronize the data plane clock. For example, when the time difference between the data plane clock and the management plane clock is greater than or equal to 200 ms, the data plane clock is synchronized based on the management plane clock. Alternatively, if the time difference between the data plane clock and the management plane clock is less than or equal to the second threshold, the management plane clock and the data plane clock are not synchronized. It should be understood that the foregoing method for synchronizing the data plane clock based on the second threshold by using the management plane clock is merely an example. This is not limited in this application.

Optionally, if the second clock mode is the dual-clock synchronization mode, the management plane clock may be used to synchronize the data plane clock based on a vehicle speed of the vehicle. Specifically, if the vehicle speed of the vehicle is less than a third threshold, the data plane clock is synchronized based on the management plane clock. For example, when the vehicle speed is less than or equal to 5 km/h, the data plane clock is synchronized based on the management plane clock. Alternatively, if the vehicle speed of the vehicle is greater than or equal to the third threshold, the management plane clock and the data plane clock are not synchronized. The third threshold indicates a maximum vehicle speed at which a time jump is allowed for autonomous driving in the current scenario. It should be understood that the third threshold may be a fixed value, or may be different thresholds determined based on different scenarios. For example, when the vehicle travels on an urban road, the third threshold may be 5 km/h, or when the vehicle travels on an open highway road, the third threshold may be 85 km/h. It should be understood that the foregoing method for synchronizing the data plane clock based on the vehicle speed of the vehicle by using the management plane clock is merely an example. This is not limited in this application.

Optionally, if the second clock mode is the dual-clock synchronization mode, the management plane clock may be used to synchronize the data plane clock based on whether the vehicle is taken over. For example, a driver monitoring system (driver monitoring system, DMS) learns of a current driver status, and if it is determined that the vehicle is taken over by the user, the data plane clock may be synchronized based on a management plane clock. According to the method, when the vehicle is in a safe state in which the vehicle is taken over, the data plane clock can be synchronized based on the management plane clock, to avoid impact on the autonomous driving algorithm.

It should be understood that the management plane clock may be used to synchronize the data plane clock based on the second threshold with reference to the vehicle speed of the vehicle. Specifically, when the time difference between the data plane clock and the management plane clock is greater than the second threshold time_gap, the synchronization data plane clock and the management plane clock may be determined based on the vehicle speed. For example, if the vehicle speed is less than the third threshold, the data plane clock is synchronized based on the management plane clock. For example, when the vehicle is driving on a complex urban road, for example, when the vehicle is driving on a congested urban road section in peak commute hours, the time difference between the data plane clock and the management plane clock is greater than time_gap. If the vehicle speed is less than a third threshold, for example, 1 km/h, it may be determined, based on a vehicle status whose vehicle speed is less than the third threshold, that clock synchronization in the current status does not affect autonomous driving, and the data plane clock may be synchronized based on the management plane clock. For another example, when the vehicle runs on a simple road condition at a high speed, for example, when the vehicle travels on a highway without other vehicles, the time difference between the data plane clock and the management plane clock is greater than time_gap. If the vehicle speed is less than a third threshold, for example, 85 km/h, it may be determined, based on the vehicle status whose vehicle speed is less than the third threshold, that clock synchronization in the current status does not affect autonomous driving, and the data plane clock may be synchronized based on the management plane clock.

For example, when the time difference between the data plane clock and the management plane clock is greater than the second threshold, before the management plane clock is used to synchronize the data plane clock, it is determined that the vehicle is taken over. For example, when the vehicle travels on an urban road with a complex road condition at a speed higher than the second threshold, if a time difference between the data plane clock and the management plane clock is greater than time_gap, it is determined whether the vehicle is taken over. If the vehicle is taken over, it may be considered that the vehicle is currently in a safe state. The time jump generated when the management plane clock is used to synchronize the data plane clock does not affect autonomous driving. If the vehicle is not taken over, it is determined whether the vehicle exits the autonomous driving, and if the vehicle does not exit the autonomous driving, the user is reminded to take over the vehicle or exit the autonomous driving.

It should be understood that the foregoing method for synchronizing the data plane clock based on the management plane clock is merely an example for ease of description. This is not limited in this embodiment of this application.

It should be understood that the data plane clock and the management plane clock may be synchronized based on system settings. For example, when developing an autonomous driving algorithm, an algorithm development user sets a clock synchronization manner, a condition, and the like. For example, in a travelling process of the vehicle, the data plane clock and the management plane clock may be synchronized based on the system settings.

For example, when autonomous driving is started for the first time, it may be determined that the dual-clock mode is the dual-clock synchronization mode or the dual-clock asynchronization mode according to a default clock scheme configured in a system.

Optionally, the vehicle may include a first apparatus and a second apparatus. Both the first apparatus and the second apparatus include a data plane clock and a management plane clock. Both the first apparatus and the second apparatus can control travelling of the vehicle.

For example, when the first apparatus controls travelling of the vehicle, if the data plane clock needs to be synchronized based on the management plane clock, for example, when a time difference between the data plane clock and the management plane clock in the first apparatus is greater than a second threshold, data of the first apparatus may be backed up to the second apparatus, the second apparatus controls travelling of the vehicle based on the backed-up data of the first apparatus, and synchronizes the data plane clock of the first apparatus based on the management plane clock of the first apparatus. The data of the first apparatus may be data used by the first apparatus to control travelling of the vehicle.

In this embodiment of this application, the data of the first apparatus for controlling travelling of the vehicle is backed up to the second apparatus, and the second apparatus controls travelling of the vehicle, so that when the data plane clock is synchronized based on the management plane clock of the first apparatus, impact on autonomous driving application logic can be avoided, and stable running of the autonomous driving can be ensured.

Further, after the data plane clock of the first apparatus is synchronized based on the management plane clock of the first apparatus, the first apparatus may control travelling of the vehicle.

Specifically, data of the second apparatus may be backed up to the first apparatus, so that the first apparatus may control travelling of the vehicle again based on the backed-up data of the second apparatus. The data of the second apparatus may be data used by the second apparatus to control travelling of the vehicle.

In this embodiment of this application, the data of the second apparatus for temporarily controlling travelling of the vehicle is backed up to the first apparatus, and the first apparatus after synchronizing the data plane clock based on the management plane clock may control travelling of the vehicle again. When performance of running the autonomous driving by the first apparatus is higher than that of the second apparatus, the autonomous driving algorithm can run more smoothly and efficiently.

Further, after the first apparatus controls travelling of the vehicle again, the second apparatus may synchronize the data plane clock of the second apparatus based on the management plane clock of the second apparatus. Therefore, when the second apparatus needs to subsequently control travelling of the vehicle, impact on the autonomous driving caused by asynchronization between the data plane clock and the management plane clock of the second apparatus can be avoided.

In this embodiment of this application, when the algorithm development user can obtain clock synchronization permission in the domain controller, the algorithm development user may develop, according to the algorithm, a system configuration set by the user, and coordinate, by coordinating internal execution and status switching between the vehicle and the domain controller, the first apparatus or the second apparatus to control travelling of the vehicle, so as to implement synchronization between the management plane clock and the data plane clock, thereby maintaining stable running of the autonomous driving.

In this embodiment of this application, synchronization is performed between the data plane clock and the management plane clock, so that impact of the time jump on the autonomous driving can be avoided while external interaction is met, and stable running of autonomous driving application logic can be ensured.

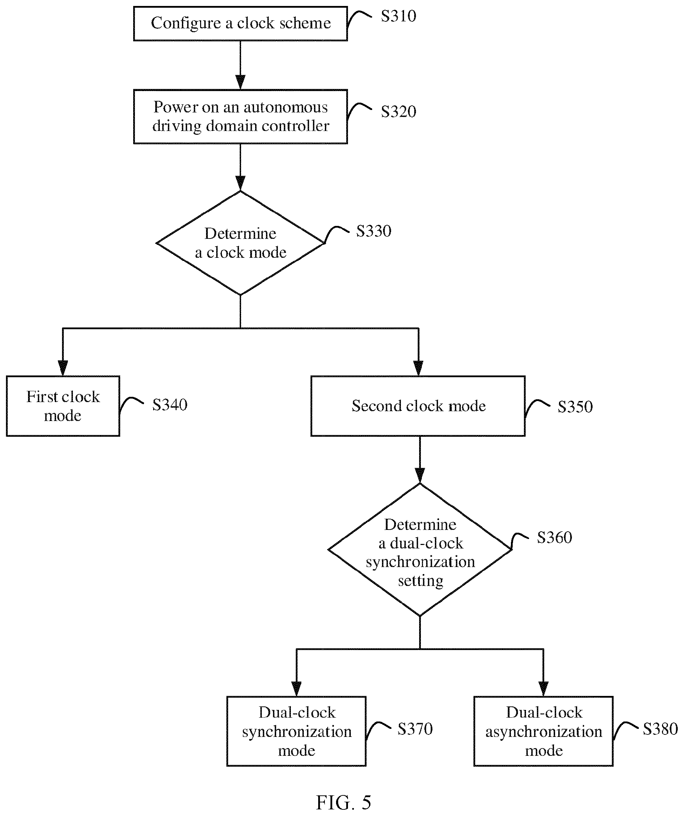

For example, FIG. 5 is an example flowchart of a clock synchronization method according to an embodiment of this application. As shown in FIG. 5, the following steps are included.

S310: Configure a clock scheme through a system configuration.

Optionally, the clock scheme may be configured in the system configuration. It should be understood that the system configuration may include one or more of parameters such as a clock mode, a first threshold used to determine the clock mode, a clock signal switching threshold used to determine an external clock source, a synchronization mode between a data plane clock and a management plane clock, a second threshold, a third threshold, and an environment of a vehicle used to determine the external clock source. For example, if the clock mode is set to a first clock mode in the system configuration, or the clock mode is set to a second clock mode, a default clock mode may be configured for the vehicle. Optionally, a synchronization mode between the data plane clock and the management plane clock may be configured in the system configuration. For example, the clock mode is set to the second clock mode, and the synchronization mode between the data plane clock and the management plane clock is set to synchronization, that is, the second clock mode is configured as a dual-clock synchronization mode, or the synchronization mode between the data plane clock and the management plane clock is set to asynchronous, that is, the second clock mode is configured as a dual-clock asynchronization mode. Optionally, a second threshold time_gap for triggering synchronization of the data plane clock based on the management plane clock may be configured in the system configuration. For example, the second threshold for triggering synchronization may be the following: When the time difference between the data plane clock and the management plane clock is less than the second threshold, it is considered that the data plane clock and the management plane clock are in a synchronous state, a requirement of autonomous driving is met, and the data plane clock does not need to be synchronized based on the management plane clock. When the time difference between the data plane clock and the management plane clock is greater than or equal to the second threshold, it is considered that the data plane clock and the management plane clock are in an asynchronous state, and the data plane clock may be synchronized based on the management plane clock. It should be understood that the foregoing method for configuring the clock scheme in the system configuration is merely an example for ease of description. This is not limited in this embodiment of this application.

S320: Enable autonomous driving.

It should be understood that an autonomous driving domain controller may be powered on to start the autonomous driving, or a controller, for example, a vehicle-mounted central computer, a vehicle-mounted central computing platform, or vehicle-mounted cloud computing may be powered on to start the autonomous driving. This is not limited in this embodiment of this application.

S330: A time synchronization basic service function module determines that the clock mode is the first clock mode or the second clock mode. If it is determined that the clock mode is the first clock mode, S340 is performed. If it is determined that the clock mode is the second clock mode, S350 is performed.

Optionally, the clock mode may be determined based on signal quality of a GNSS signal. When the GNSS signal quality is greater than or equal to the first threshold, it is determined that the clock mode is the first clock mode. When the GNSS signal quality is less than the first threshold, it is determined that the clock mode is the second clock mode.

It should be understood that the clock mode is determined based on the signal quality of the GNSS signal, and the GNSS signal is obtained before the clock mode is determined.

For example, when the vehicle travels on an open road with a good GNSS signal, it may be determined that the clock mode is the first clock mode based on the good GNSS signal quality. For example, when a signal parameter of the GNSS signal is greater than or equal to the first threshold, it may be determined that the clock mode is the first clock mode, to simplify clock synchronization logic when a requirement of autonomous driving is met, and reduce overheads of resources used for clock synchronization. When the vehicle travels in the tunnel, it may be determined that the clock mode is the second clock mode based on poor signal quality of the GNSS signal, so that running of the autonomous driving can be maintained based on an internal clock source when the GNSS signal quality is poor.

It should be understood that step S330 may correspond to step S220, and details are not described herein again.

Optionally, the clock mode may be determined based on the system configuration. For example, the system configuration in step S310 may be read to obtain configuration information of the clock mode in the system configuration in step S310, and the clock mode is determined based on the configuration information.

S340: The vehicle runs the autonomous driving based on the first clock mode.

It should be understood that in the first clock mode, clock sources of the data plane clock and the management plane clock may be a GNSS clock.

For example, the first clock mode may be applied to an autonomous driving scenario in which GNSS signal quality is good, or may be applied to autonomous driving that can withstand a GNSS clock jump. It should be understood that different first thresholds may be set for an autonomous driving algorithm that can withstand the GNSS clock jump and an autonomous driving algorithm that cannot withstand the GNSS clock jump. This is not limited in this embodiment of this application.

In this embodiment of this application, the clock mode is determined, and the autonomous driving may run based on the first clock mode. Clock synchronization logic can be simplified and clock synchronization complexity can be reduced while the autonomous driving application logic is satisfied. This reduces resource overheads used for clock synchronization.

S350: The vehicle runs the autonomous driving based on the second clock mode.

It should be understood that, in a dual-clock mode, the management plane clock may use the external clock source as a clock source, and the data plane clock may use the internal clock source as a clock source. For example, the external clock source may be the GNSS clock or the NTP clock, and the second clock may be an RTC clock. Details are not described herein again.

Optionally, the GNSS clock or the NTP clock may be selected as the clock source of the management plane clock according to different scenarios. For example, when the vehicle is in a scenario with good GPS signals, for example, an urban open road scenario, the GNSS clock may be selected as the clock source of the management plane clock. In a scenario in a tunnel or under a bridge, the NTP clock can be used as the clock source of the management plane. In a scenario with an entrance and exit between a tunnel and an open road, the GNSS clock can be used as the clock source of the management plane. In an underground garage scenario, the NTP clock can be used as the clock source of the management plane clock. It should be understood that the foregoing selection of the GNSS clock or the NTP clock as the clock source of the management plane clock in different scenarios is merely an example. This is not limited in this embodiment of this application.

It should be understood that before autonomous driving is performed in the dual-clock manner, the data plane clock and the management plane clock need to be synchronized with the respective clock sources of the data plane clock and the management plane clock. Details are not described herein again.

In this embodiment of this application, a more accurate clock source of the management plane may be selected by selecting the clock source of the management plane clock, so as to avoid impact on autonomous driving application logic due to an inaccurate clock source of the management plane clock.

In this embodiment of this application, it is determined that the clock mode is the second clock mode, so that impact of a time jump on the autonomous driving application logic can be avoided.

S360: Determine a dual-clock synchronization setting. If the data plane clock and the management plane clock are set to be synchronous, it is determined that the second clock mode is the dual-clock synchronization mode, and S370 is performed. Alternatively, if the data plane clock and the management plane clock are set to be asynchronous, it is determined that the second clock mode is the dual-clock asynchronization mode, and S380 is performed.

It should be understood that, it may be determined that the second clock mode is the dual-clock synchronization mode or the dual-clock asynchronization mode based on a system configuration file set by an algorithm development user, for example, a configuration of the second clock mode in the clock scheme configured in step S310. Alternatively, it may be determined that the second clock mode is the dual-clock synchronization mode or the dual-clock asynchronization mode based on whether the vehicle has a communication requirement with an external device. Alternatively, it may be determined that the second clock mode is the dual-clock synchronization mode or the dual-clock asynchronization mode in another manner. It should be understood that the foregoing method for determining that the second clock mode is the dual-clock synchronization mode or the dual-clock asynchronization mode is merely an example for description. This is not limited in this embodiment of this application.

S370: The vehicle runs the autonomous driving based on the dual-clock synchronization mode.

It should be understood that the dual-clock synchronization mode means that the data plane clock is synchronized with the management plane clock. Details are not described herein again.

For example, when the vehicle travels on a complex urban road with poor GNSS signal quality in some sections, and external interaction is required, the autonomous driving may be performed in the dual-clock synchronization mode. By using this method, external interaction can be performed and stable running of the autonomous driving can be maintained. It should be understood that the foregoing is applicable to a scenario in which the autonomous driving runs in the dual-clock synchronization mode, and is merely an example for description. This is not limited in this embodiment of this application.

S380: The vehicle runs the autonomous driving based on the dual-clock asynchronization mode.

It should be understood that the dual-clock asynchronization mode means that the data plane clock is not synchronized with the management plane clock. Details are not described herein again.

For example, when the vehicle travels on the complex urban road with poor GNSS signal quality in some sections and does not require external interaction, the autonomous driving may be performed in the dual-clock asynchronization mode. In this manner, stable running of autonomous driving can be maintained. It should be understood that the foregoing is applicable to a scenario in which the autonomous driving is run in a manner in which the data plane clock and the management plane clock are not synchronized in the dual-clock mode. This is merely an example for description. This is not limited in this embodiment of this application.

According to the autonomous driving clock synchronization method in this embodiment of this application, the clock mode may be determined. It is determined that the clock mode is the first clock mode or the second clock mode. If it is determined that the clock mode is the second clock mode, it may be determined that the second clock mode is the dual-clock synchronization mode or the dual-clock asynchronization mode. By determining the clock mode and whether the data plane clock and the management plane clock are synchronized, the user can flexibly configure different clock schemes such as the first clock mode, the dual-clock synchronization mode, and the dual-clock asynchronization mode for the autonomous driving function based on different autonomous driving scenarios. In this way, hardware and software logic of a same domain controller can meet different requirements of the user for autonomous driving clock synchronization in different scenarios.

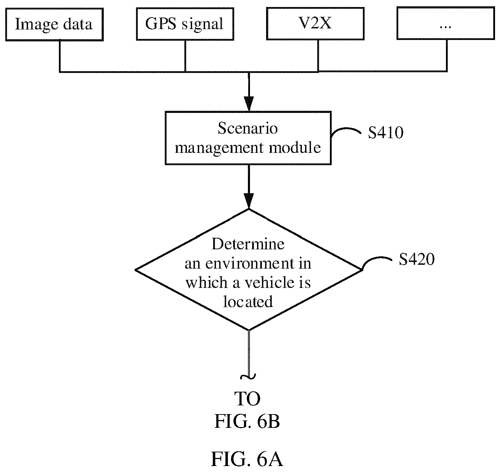

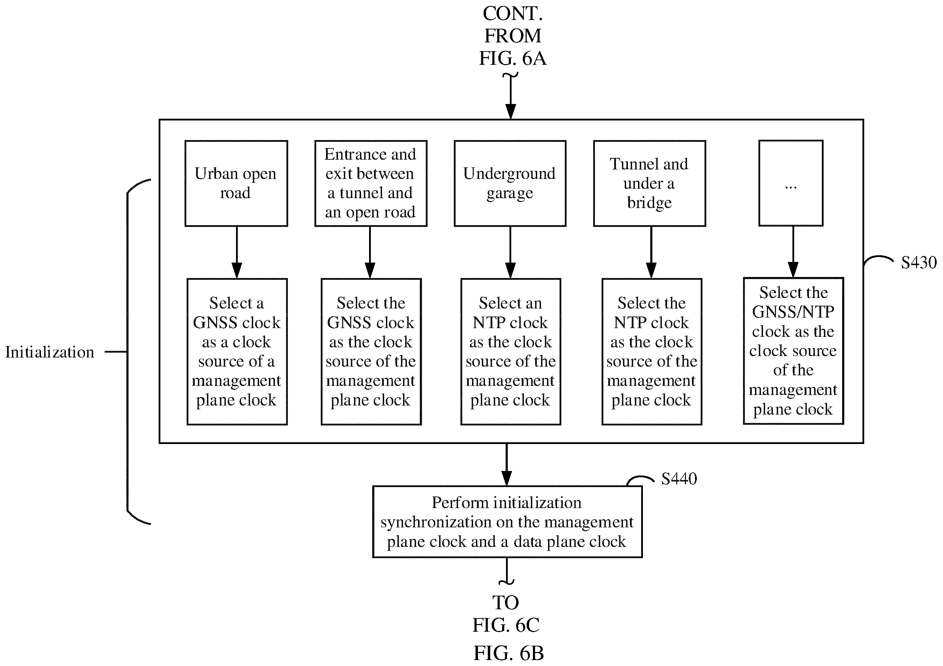

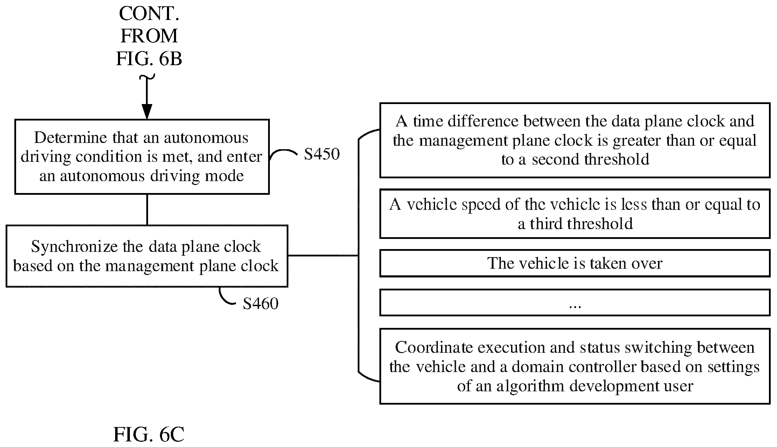

For example, FIG. 6A, FIG. 6B and FIG. 6C are an example flowchart of a dual-clock synchronization mode method according to an embodiment of this application. As shown in FIG. 6A, FIG. 6B and FIG. 6C, the method may include the following steps.

S410: Obtain vehicle travelling scenario information.

Specifically, the vehicle travelling scenario information may be obtained from image data, a GPS signal, V2X, and other information. It should be understood that the foregoing manner of obtaining the vehicle travelling scenario information is merely an example. This is not limited in this embodiment of this application.

S420: Determine an environment in which the vehicle is located.

Specifically, a vehicle travelling scenario may be determined based on the obtained vehicle travelling scenario information, that is, an environment in which the vehicle is located is determined. For example, a scenario management module may determine the driving scenario of the vehicle based on the obtained vehicle travelling scenario information. For example, the scenario management module may determine, based on the obtained image data indicating that the vehicle is located in a tunnel, that the vehicle travelling scenario is the tunnel. It should be understood that the foregoing method for determining the vehicle travelling scenario is merely an example for ease of description. This is not limited in this embodiment of this application.

S430: Determine a clock source of a management plane clock based on the environment in which the vehicle is located.

For example, if the environment in which the vehicle is located is an urban open road, it may be determined that an external clock source, that is, the clock source of the management plane clock, is a GNSS clock. If the vehicle travelling scenario is a scenario in a tunnel or under a bridge, it may be determined that the clock source of the management plane clock is the NTP clock. If the vehicle travelling scenario is a scenario of an entrance and exit between a tunnel and an open road, it may be determined that the management plane clock is the GNSS clock. If the vehicle travelling scenario is an underground garage scenario, it may be determined that the clock source of the management plane clock is the NTP clock. If the vehicle is located in an indoor parking lot, it may be determined that the clock source of the management plane clock is the NTP clock. If an environment in which the vehicle is located is another scenario, it may be determined that the clock source of the management plane clock is the GNSS clock or the NTP clock based on the autonomous driving application logic. Details are not described herein again.

In this embodiment of this application, the clock source of the management plane clock is determined, so that more accurate time can be provided for the management plane clock, and impact on autonomous driving application logic caused by an improper clock source of the management plane clock can be avoided.

S440: Perform initialization synchronization on the data plane clock and the management plane clock.

For example, if the vehicle travelling scenario is the urban open road scenario, initialization synchronization is performed on the management plane clock whose clock source is the GNSS clock and the data plane clock whose clock source is the RTC clock. If the vehicle travelling scenario is the scenario in a tunnel or under a bridge, initialization synchronization is performed on the management plane clock whose clock source is the NTP clock and the data plane clock whose clock source is the RTC clock. For brevity, examples are not provided herein one by one. It should be understood that the foregoing method for performing initialization synchronization on the data plane clock and the management plane clock based on the environment in which the vehicle is located is merely an example. This is not limited in this embodiment of this application.

It should be understood that, in this embodiment of this application, initialization synchronization is performed on the data plane clock and the management plane clock, so that a time difference between the data plane clock and the management plane clock can be eliminated when the autonomous driving mode is entered. This prevents additional accumulation of the time difference between the data plane clock and the management plane clock after the autonomous driving mode is entered, thereby affecting an autonomous driving application.

S450: Determine that an autonomous driving condition is met, and enter an autonomous driving mode.

For example, determining that the autonomous driving condition is met means: determining whether synchronization between the data plane clock and the management plane clock is completed; determining that a vehicle tire pressure is normal; or determining that a sensor, for example, a radar or a camera related to the autonomous driving, is normal or within an available working condition range. It should be understood that the foregoing method for determining that the autonomous driving condition is met is merely an example. This is not limited in this application. Examples are not provided herein one by one.

Specifically, when the autonomous driving condition is met, the autonomous driving mode is entered.

S460: Synchronize the data plane clock based on the management plane clock.

For example, in the autonomous driving, the data plane clock may be synchronized based on the management plane clock. For example, when the vehicle is taken over, the data plane clock is synchronized based on the management plane clock. For another example, when the vehicle speed of the vehicle is less than a third threshold, for example, 5 km/h, the data plane clock is synchronized based on the management plane clock. For another example, when the time difference between the data plane clock and the management plane clock is greater than a second threshold time_gap, and a vehicle status meets synchronization between the data plane and the management plane, for example, when the vehicle is in a takeover state, or a vehicle speed is less than the third threshold, the data plane clock may be synchronized based on the management plane clock. For brevity, examples are not provided one by one. It should be understood that the foregoing method for synchronizing the data plane clock based on the management plane clock is merely an example for ease of description. This is not limited in this embodiment of this application.

For example, when the time difference between the data plane clock and the management plane clock is greater than the second threshold time_gap, and a scenario of synchronization between the data plane and the management plane is met, whether the vehicle exits an autonomous driving system may be determined based on the vehicle status. For example, when the vehicle travels at a high speed, if the time difference between the data plane clock and the management plane clock is greater than the second threshold time_gap, and the vehicle is not taken over, it is determined whether the vehicle has exited the autonomous driving mode, to prompt the user to perform manual driving, or to prompt that the autonomous driving condition cannot be met and the autonomous driving needs to be exited.

It should be understood that the management plane clock may be used to synchronize the data plane clock based on settings of an algorithm development user. Specifically, if the algorithm development user can obtain clock synchronization permission, the algorithm development user may implement execution and status switching between the vehicle and a domain controller by invoking interfaces of an execution management module and a status management module of the domain controller, so as to implement synchronization of the data plane clock based on the management plane clock.

It should be understood that the foregoing method for synchronizing the data plane clock based on the management plane clock is merely an example. This is not limited in this embodiment of this application.

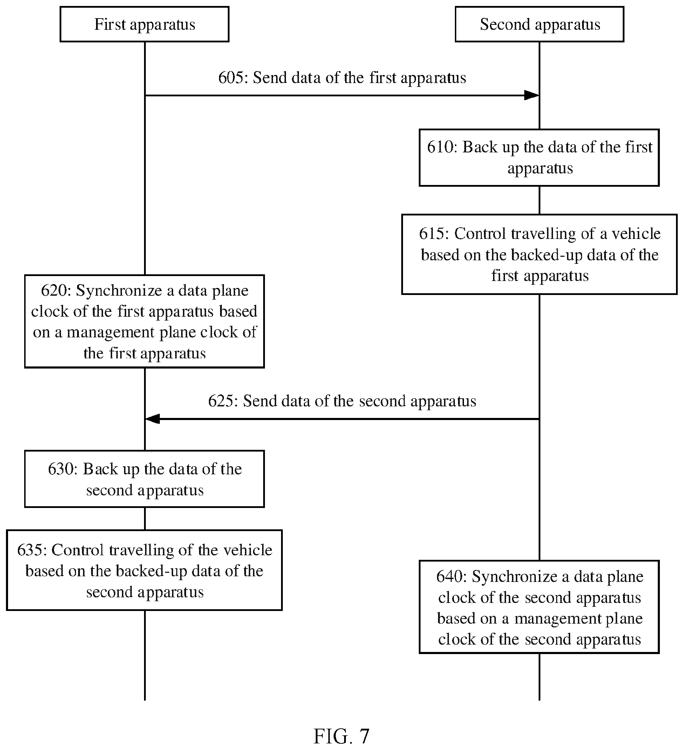

For ease of understanding of the foregoing method for synchronizing the data plane clock based on the settings of the algorithm development user by using the management plane clock, for example, FIG. 7 is an example flowchart of a method for synchronizing a management plane clock based on a data plane clock according to an embodiment of this application. The vehicle may include a first apparatus and a second apparatus. The first apparatus and the second apparatus may include a data plane clock and a management plane clock. The first apparatus may be the SoC shown in FIG. 3, and the second apparatus may be the MCU shown in FIG. 3. It should be understood that: The foregoing first apparatus and the second apparatus are merely examples for ease of description. This is not limited in this application.

With reference to FIG. 7, the following describes a method for synchronizing a data plane clock based on a management plane clock by coordinating execution and status switching between a vehicle and a domain controller. As shown in FIG. 7, the method may include some or all of the following steps.

S605: A first apparatus may send data of the first apparatus. Correspondingly, a second apparatus may obtain the data of the first apparatus.

Specifically, the second apparatus may directly obtain the data of the first apparatus from the first apparatus, or may obtain the data of the first apparatus by using another apparatus. For example, the second apparatus may obtain the data of the first apparatus from a unified data management module. This is not limited in this application. The data of the first apparatus is data used by the first apparatus to control travelling of the vehicle.

S610: The second apparatus backs up data of a first apparatus.

It should be understood that, by using steps S605 and S610, the data of the first apparatus may be backed up to the second apparatus, so that the second apparatus may control travelling of the vehicle based on the data.

S615: The second apparatus controls travelling of the vehicle based on the backed-up data of the first apparatus.

It should be understood that the data of the first apparatus is backed up, and the second apparatus controls travelling of the vehicle, so that the apparatus for controlling travelling of the vehicle is switched from the first apparatus to the second apparatus, that is, when the second apparatus controls travelling of the vehicle, the first apparatus no longer controls travelling of the vehicle.

S620: Synchronize a data plane clock of the first apparatus based on a management plane clock of the first apparatus.

For example, data of a SoC that controls travelling of the vehicle may be backed up to an MCU, and the MCU controls travelling of the vehicle. After controlling travelling of the vehicle, the MCU synchronizes a data plane clock in the SoC based on a management plane clock in the SoC.

It should be understood that a clock source of the management plane clock of the first apparatus may be determined based on an environment in which the vehicle is located. As described in step S430, details are not described herein again.

It should be understood that, during a period of synchronizing the data plane clock based on the management plane clock, an autonomous driving algorithm may be coordinated to ignore an impact of a time jump. For example, during a period of synchronizing the data plane clock based on the management plane clock (for example, a synchronization process takes 1s), the algorithm may ignore impact of a timestamp of data on algorithm logic in the time period. For example, the algorithm no longer determines validity of the timestamp of the data within the 1s, where the timestamp of the data may be used to verify time at which the data is generated.

It should be understood that, because travelling of the vehicle is controlled by the second apparatus, fault reporting may be coordinated, and a data plane time jump generated due to synchronization of the data plane clock of the first apparatus based on the management plane clock of the first apparatus is tolerated, and a fault caused by the time jump may not be reported, so that the autonomous driving can run stably.

In this embodiment of this application, the data of the first apparatus for controlling travelling of the vehicle is backed up to the second apparatus, and the second apparatus controls travelling of the vehicle. In this way, when the data plane clock of the first apparatus is synchronized based on the management plane clock of the first apparatus, impact on autonomous driving application logic can be avoided. This ensures stable running of the autonomous driving.

Further, the apparatus for controlling vehicle travelling may be switched from the second apparatus to the first apparatus again.

S625: The second apparatus may send data of the second apparatus. Correspondingly, the first apparatus may obtain the data of the second apparatus.

Specifically, the first apparatus may directly obtain the data of the second apparatus from the second apparatus, or may obtain the data of the second apparatus by using another apparatus. For example, the first apparatus may obtain the data of the second apparatus from a unified data management module. This is not limited in this application. The data of the second apparatus is data used by the second apparatus to control travelling of the vehicle.

S630: The first apparatus backs up the data of the second apparatus.

It should be understood that, by using steps S625 and S630, the data of the second apparatus may be backed up to the first apparatus, so that the first apparatus may control travelling of the vehicle based on the data.

S635: The first apparatus may control driving of the vehicle based on the backed-up data of the second apparatus.

For example, the data of the MCU that controls travelling of the vehicle may be backed up to the SoC, and the SoC controls travelling of the vehicle.

It should be understood that, after the data plane clock of the first apparatus is synchronized based on the management plane clock of the first apparatus, the data plane clock and the management plane clock of the first apparatus are in a synchronous state. By backing up the data of the second apparatus that controls travelling of the vehicle, the first apparatus may control travelling of the vehicle again based on the backed-up data. When performance of running the autonomous driving by the first apparatus is higher than that of the second apparatus, the first apparatus controls travelling of the vehicle again, so that the autonomous driving runs more smoothly and efficiently.

Further, after the first apparatus controls travelling of the vehicle again, clock synchronization may be performed between the data plane clock and the management plane clock of the second apparatus.

S640: Synchronize the data plane clock of the second apparatus based on the management plane clock of the second apparatus.

For example, after the SoC controls travelling of the vehicle again, the SoC may synchronize the data plane clock in the MCU based on the management plane clock in the MCU.

It should be understood that the clock source of the management plane clock of the second apparatus may be determined based on the environment in which the vehicle is located. The autonomous driving algorithm may be coordinated to ignore the time jump caused by the clock synchronization. The fault reporting caused by the time jump can be coordinated. For brevity, details are not described herein.

In this embodiment of this application, the data plane clock of the second apparatus is synchronized based on the management plane clock of the second apparatus, so that when the second apparatus subsequently needs to control travelling of the vehicle, impact on autonomous driving caused by asynchronization between the data plane clock and the management plane clock of the second apparatus can be avoided.

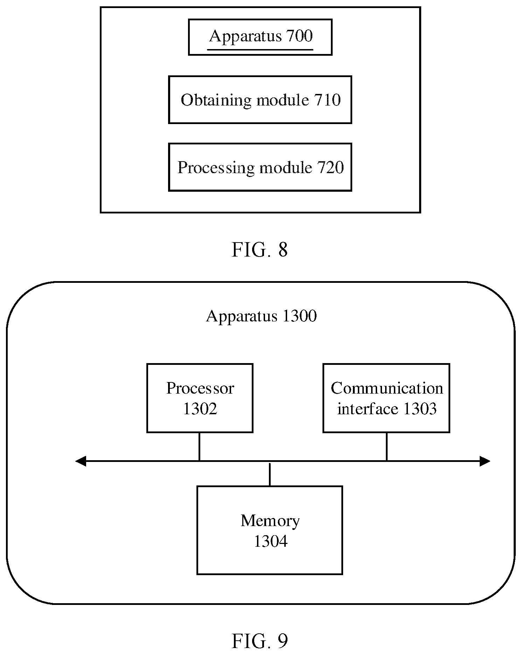

FIG. 8 is an example diagram of a structure of a time synchronization apparatus according to an embodiment of this application. The apparatus 700 includes an obtaining module 710 and a processing module 720.

The obtaining module 710 is configured to obtain a first signal sent by an external clock source. The processing module 720 is configured to determine signal quality of the first signal, and further configured to determine a clock mode based on the signal quality of the first signal, where the clock mode includes a first clock mode or a second clock mode, and when this vehicle works in the first clock mode, the vehicle obtains first clock information from the external clock source, or when this vehicle works in the second clock mode, the vehicle obtains the first clock information and second clock information from the external clock source and an internal clock source respectively, where the internal clock source is located in the vehicle.

Optionally, the processing module 720 is specifically configured to: when the signal quality of the first signal is greater than or equal to a first threshold, determine that the clock mode is the first clock mode; or when the signal quality of the first signal is less than a first threshold, determine that the clock mode is the second clock mode.

Optionally, when the clock mode is the second clock mode, the processing module 720 is further configured to synchronize the management plane clock based on the first clock information, and synchronize the data plane clock based on the second clock information.

Optionally, the processing module 720 is further configured to synchronize the data plane clock based on the management plane clock.

Optionally, the processing module 720 is further configured to: before synchronizing the data plane clock based on the management plane clock, determine that the vehicle needs to communicate with an external device.

Optionally, the processing module 720 is further configured to: before synchronizing the data plane clock based on the management plane clock, determine that a time difference between the data plane clock and the management plane clock is greater than or equal to a second threshold.

Optionally, the processing module 720 is further configured to: before synchronizing the data plane clock based on the management plane clock, determine that a vehicle speed of the vehicle is less than or equal to a third threshold.

Optionally, the processing module 720 is further configured to: before synchronizing the data plane clock based on the management plane clock, determine that a user takes over the vehicle.

Optionally, the processing module 720 is further configured to determine the external clock source based on an environment in which the vehicle is located.

For example, the processing module 720 is specifically configured to: when the vehicle is located on an open road or an entrance and exit between a tunnel and an open road, determine that the external clock source is a GNSS clock, or when the vehicle is located in a tunnel, under a bridge, or in an underground garage, determine that the external clock source is a network time protocol NTP clock.

Optionally, the processing module 720 may include a first apparatus and a second apparatus, where both the first apparatus and the second apparatus include a data plane clock and a management plane clock. The processing module 720 is specifically configured to synchronize the data plane clock of the first apparatus based on the management plane clock of the first apparatus. The processing module 720 is further configured to: back up data of the first apparatus to the second apparatus; and control travelling of the vehicle based on the backed-up data of the first apparatus by using the second apparatus.

Optionally, the processing module 720 is further configured to: after synchronizing the data plane clock of the first apparatus based on the management plane clock of the first apparatus, control travelling of the vehicle by using the first apparatus.

Optionally, the processing module 720 is further configured to: after travelling of the vehicle is controlled by using the first apparatus, synchronize the data plane clock of the second apparatus based on the management plane clock of the second apparatus.

It should be understood that the time synchronization apparatus shown in FIG. 8 may be configured to implement the foregoing time synchronization method 200, where the obtaining module may be configured to implement step S210, and the processing module may be configured to implement steps S215 and S220. The time synchronization apparatus shown in FIG. 8 may be further configured to implement the time synchronization methods in FIG. 5 to FIG. 7. For specific steps, refer to the foregoing descriptions of FIG. 5 to FIG. 7. For brevity, details are not described herein again in this application.

It should be understood that the time synchronization apparatus in this embodiment of this application may be implemented by software, for example, implemented by a computer program or instructions that has/have the foregoing function. The corresponding computer program or instructions may be stored in a memory inside the terminal, and a processor reads the corresponding computer program or instructions in the memory to implement the foregoing function. Alternatively, the time synchronization apparatus in this embodiment of this application may be implemented by hardware. The processing module 720 is a processor (for example, an NPU, a GPU, or a processor on a system chip), and the obtaining module 710 is a data interface. Alternatively, the time synchronization apparatus in this embodiment of this application may be implemented through combination of the processor and a software module.

FIG. 9 is a schematic diagram of a structure of an apparatus 1300 according to an embodiment of this application. The apparatus 1300 includes a processor 1302, a communication interface 1303, and a memory 1304. An example of the apparatus 1300 is a chip. Another example of the apparatus 1300 is a computing device.

The processor 1302, the memory 1304, and the communication interface 1303 may communicate with each other by using a bus. The memory 1304 stores executable code, and the processor 1302 reads the executable code in the memory 1304 to perform a corresponding method. The memory 1304 may further include an operating system and other software modules required for running processes. The operating system may be LINUX^{™}, UNIX^{™}, WINDOWS^{™}, or the like.

For example, the executable code in the memory 1304 is used for implementing the methods shown in FIG. 2 to FIG. 7, and the processor 1302 reads the executable code in the memory 1304 to perform the method shown in FIG. 2 to FIG. 7.

The processor 1302 may be a CPU. The memory 1304 may include a volatile memory (volatile memory), for example, a random access memory (random access memory, RAM). The memory 1304 may further include a non-volatile memory (non-volatile memory, NVM), for example, a read-only memory (read-only memory, ROM), a flash memory, a hard disk drive (hard disk drive, HDD), or a solid state disk (solid state disk, SSD).

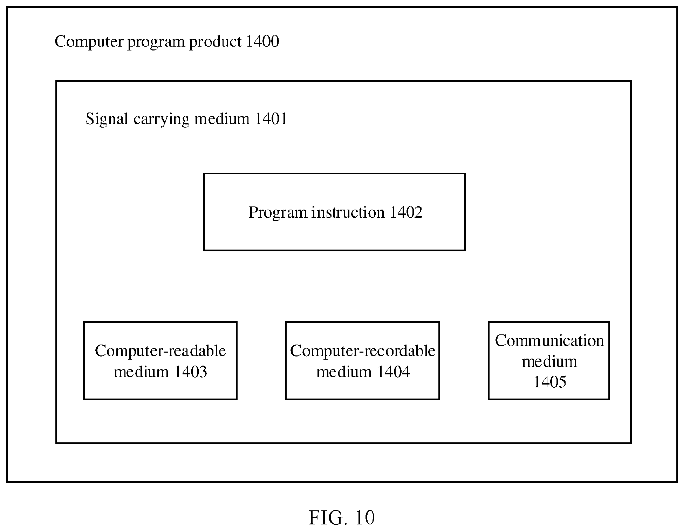

In some embodiments of this application, the disclosed method may be implemented as computer program instructions encoded on a computer-readable storage medium or encoded on another non-transitory medium or product in a machine-readable format. FIG. 10 schematically shows a conceptual partial view of an example computer program product arranged according to at least some non-claimed embodiments shown herein, and the example computer program includes a computer program for executing a computer process on a computing device. In an embodiment, the example computer program product 1400 is provided by using a signal carrying medium 1401. The signal carrying medium 1401 may include one or more program instructions 1402 that may provide the foregoing functions or some functions described for the method shown in FIG. 4 when being run by one or more processors. Therefore, for example, refer to the embodiment shown in FIG. 4, one or more features of S210 to S220 may be borne by one or more instructions associated with the signal carrying medium 1401.

In some examples, the signal carrying medium 1401 may include a computer-readable medium 1403, such as but not limited to a hard disk drive, a compact disc (CD), a digital video disc (DVD), a digital tape, a memory, a ROM, or a RAM. In some implementations, the signal carrying medium 1401 may include a computer-recordable medium 1404, for example, a memory, a read/write (R/W) CD, or an R/W DVD. In some implementations, the signal carrying medium 1401 may include a communication medium 1405. The medium is, for example, but is not limited to a digital and/or analog communication medium (for example, an optical fiber cable, a waveguide, a wired communication link, or a wireless communication link). Therefore, for example, the signal carrying medium 1401 may be conveyed by a wireless communication medium 1405 (for example, a wireless communication medium that complies with the IEEE 802.11 standard or another transmission protocol). The one or more program instructions 1402 may be, for example, computer-executable instructions or logic implementation instructions. In some examples, the computing device may be configured to provide various operations, functions, or actions in response to the program instructions 1402 that are delivered to the computing device by using one or more of the computer-readable medium 1403, the computer-recordable medium 1404, and/or the communication medium 1405. It is to be understood that the arrangement described herein is merely used as an example. Thus, a person skilled in the art appreciates that another arrangement and another element (for example, a machine, an interface, a function, a sequence, and an array of functions) can be used to replace the arrangement, and some elements may be omitted together depending on a desired result. In addition, many of the described elements are functional entities that can be implemented as discrete or distributed components, or implemented in any suitable combination at any suitable position in combination with another component.

In embodiments of this application, "first", "second", and various numeric numbers are merely used for distinguishing for ease of description, for example, distinguishing different clock sources and media, and are not intended to limit the scope of embodiments of this application.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates that the associated objects are in an "or" relationship.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the method described in the embodiments of this application. The foregoing storage medium includes: any medium that can store program code, for example, a USB flash drive, a removable hard disk, a RAM, a magnetic disk, or an optical disc.

## Claims

1. A clock synchronization method, wherein the method is applied to a vehicle (100) and comprises:
obtaining (S210) a first signal, wherein the first signal comprises clock information of an external clock source (180);
determining (S215) signal quality of the first signal;
determining (S220) a clock mode based on the signal quality of the first signal, wherein the clock mode comprises a first clock mode or a second clock mode, and when the vehicle (100) works in the first clock mode, the vehicle (100) obtains first clock information from the external clock source (180), and when the clock mode is the first clock mode, the data plane clock and the management plane clock use the external clock source (180) as a same clock source; determining the clock mode according to the signal quality of the first signal comprises: when the signal quality of the first signal is greater than or equal to a first threshold, determining that the clock mode is the first clock mode; or, When the signal quality of the first signal is less than the first threshold, determine that the clock mode is the second clock mode; **characterized in that** when the vehicle (100) works in the second clock mode, the vehicle (100) obtains the first clock information and second clock information from the external clock source (180) and an internal clock source respectively, wherein the internal clock source is located in the vehicle (100); and
when the clock mode is the second clock mode, synchronizing a management plane clock based on the first clock information and synchronizing a data plane clock based on the second clock information.

2. The method according to claim 1, wherein the method further comprises: synchronizing (610) the data plane clock based on the management plane clock.

3. The method according to claim 2, wherein before the synchronizing (S460) the data plane clock based on the management plane clock, the method further comprises:
determining that the vehicle (100) needs to communicate with an external device.

4. The method according to claim 2 or 3, wherein before the synchronizing (S460) the data plane clock based on the management plane clock, the method further comprises:
determining that a time difference between the data plane clock and the management plane clock is greater than or equal to a second threshold.

5. The method according to any one of claims 2 to 4, wherein before the synchronizing (S460) the data plane clock based on the management plane clock, the method further comprises:
determining that a vehicle speed of the vehicle (100) is less than or equal to a third threshold.

6. The method according to any one of claims 2 to 5, wherein before the synchronizing (S460) the data plane clock based on the management plane clock, the method further comprises:
determining that the vehicle (100) is taken over.

7. The method according to any one of claims 2 to 6, wherein the method further comprises: determining the external clock source (180) based on an environment in which the vehicle (100) is located.

8. The method according to claim 7, wherein the determining the external clock source (180) based on an environment in which the vehicle (100) is located comprises:
when the vehicle (100) is located on an open road or an entrance and exit between a tunnel and an open road, determining that the external clock source (180) is a global navigation satellite system, GNSS, clock; or
when the vehicle (100) is in a tunnel, under a bridge, or in an underground garage, determining that the external clock source (180) is a network time protocol, NTP, clock.

9. The method according to any one of claims 2 to 8, wherein the vehicle (100) comprises a first apparatus and a second apparatus, and both the first apparatus and the second apparatus comprise the data plane clock and the management plane clock;
the synchronizing (S460) the data plane clock based on the management plane clock comprises:
synchronizing (610) the data plane clock of the first apparatus based on the management plane clock of the first apparatus; and
the method further comprises:
backing up (630) data of the first apparatus to the second apparatus; and
controlling (635), by the second apparatus, travelling of the vehicle (100) based on the backed-up data of the first apparatus.

10. The method according to claim 9, wherein the method further comprises:
after synchronization between the data plane clock of the first apparatus and the management plane clock of the first apparatus is completed, controlling, by the first apparatus, travelling of the vehicle (100).

11. The method according to claim 10, wherein after the controlling, by the first apparatus, travelling of the vehicle (100), the method further comprises:
synchronizing (640) the data plane clock of the second apparatus based on the management plane clock of the second apparatus.

12. A clock synchronization apparatus (1300), wherein the apparatus (1300) is used in a vehicle (100), and comprises a processor (1302) and a memory (1304), the memory (1304 is configured to store program instructions, and the processor (1302) is configured to invoke the program instructions to perform the time synchronization method according to any one of claims 1 to 11.

13. A vehicle (100), comprising the clock synchronization apparatus (1300) according to claim 12.

14. A computer-readable storage medium, wherein the computer-readable storage medium stores program instructions, and when the program instructions are run by a processor, the time synchronization method according to any one of claims 1 to 11 is implemented.

15. A chip, wherein the chip comprises a processor and a data interface, and the processor reads, through the data interface, instructions stored in a memory, to perform the time synchronization method according to any one of claims 1 to 11.

## Patentansprüche

1. Taktsynchronisationsverfahren, wobei das Verfahren auf ein Fahrzeug (100) angewendet wird und Folgendes umfasst:
Erlangen (S210) eines ersten Signals, wobei das erste Signal Taktinformationen einer externen Taktquelle (180) umfasst; Bestimmen (S215) einer Signalqualität des ersten Signals; Bestimmen (S220) eines Taktmodus basierend auf der Signalqualität des ersten Signals, wobei der Taktmodus einen ersten Taktmodus oder einen zweiten Taktmodus umfasst, und, wenn das Fahrzeug (100) in dem ersten Taktmodus arbeitet, das Fahrzeug (100) erste Taktinformationen aus der externen Taktquelle (180) erlangt, und, wenn der Taktmodus der erste Taktmodus ist, der Datenebenentakt und der Verwaltungsebenentakt die externe Taktquelle (180) als dieselbe Taktquelle verwenden; wobei das Bestimmen des Taktmodus gemäß der Signalqualität des ersten Signals Folgendes umfasst: wenn die Signalqualität des ersten Signals größer als oder gleich einem ersten Schwellenwert ist, Bestimmen, dass der Taktmodus der erste Taktmodus ist; oder, wenn die Signalqualität des ersten Signals kleiner als der erste Schwellenwert ist, Bestimmen, dass der Taktmodus der zweite Taktmodus ist;
**dadurch gekennzeichnet, dass**, wenn das Fahrzeug (100) in dem zweiten Taktmodus arbeitet, das Fahrzeug (100) die ersten Taktinformationen und die zweiten Taktinformationen aus der externen Taktquelle (180) bzw. einer internen Taktquelle erlangt, wobei sich die interne Taktquelle in dem Fahrzeug (100) befindet; und
wenn der Taktmodus der zweite Taktmodus ist, Synchronisieren eines Verwaltungsebenentakts basierend auf den ersten Taktinformationen und Synchronisieren eines Datenebenentakts basierend auf den zweiten Taktinformationen.

2. Verfahren nach Anspruch 1, wobei das Verfahren ferner Folgendes umfasst: Synchronisieren (610) des Datenebenentakts basierend auf dem Verwaltungsebenentakt.

3. Verfahren nach Anspruch 2, wobei das Verfahren vor dem Synchronisieren (S460) des Datenebenentakts basierend auf dem Verwaltungsebenentakt ferner Folgendes umfasst:
Bestimmen, dass das Fahrzeug (100) mit einer externen Vorrichtung kommunizieren muss.

4. Verfahren nach Anspruch 2 oder 3, wobei das Verfahren vor dem Synchronisieren (S460) des Datenebenentakts basierend auf dem Verwaltungsebenentakt ferner Folgendes umfasst:
Bestimmen, dass die Zeitdifferenz zwischen dem Datenebenentakt und dem Verwaltungsebenentakt größer oder gleich einem zweiten Schwellenwert ist.

5. Verfahren nach einem der Ansprüche 2 bis 4, wobei das Verfahren vor dem Synchronisieren (S460) des Datenebenentakts basierend auf dem Verwaltungsebenentakt ferner Folgendes umfasst:
Bestimmen, dass eine Fahrzeuggeschwindigkeit des Fahrzeugs (100) kleiner oder gleich einem dritten Schwellenwert ist.

6. Verfahren nach einem der Ansprüche 2 bis 5, wobei das Verfahren vor dem Synchronisieren (S460) des Datenebenentakts basierend auf dem Verwaltungsebenentakt ferner Folgendes umfasst:
Bestimmen, dass das Fahrzeug (100) überholt wird.

7. Verfahren nach einem der Ansprüche 2 bis 6, wobei das Verfahren ferner Folgendes umfasst: Bestimmen der externen Taktquelle (180) basierend auf einer Umgebung, in welcher sich das Fahrzeug (100) befindet.

8. Verfahren nach Anspruch 7, wobei das Bestimmen der externen Taktquelle (180) basierend auf einer Umgebung, in welcher sich das Fahrzeug (100) befindet, Folgendes umfasst:
wenn sich das Fahrzeug (100) auf einer offenen Straße oder einer Einfahrt und Ausfahrt zwischen einem Tunnel und einer offenen Straße befindet, Bestimmen, dass die externe Taktquelle (180) ein Takt des globalen Satellitennavigationssystems, GNSS-Takt, ist; oder
wenn das Fahrzeug (100) in einem Tunnel, unter einer Brücke oder in einer Tiefgarage liegt, Bestimmen, dass die externe Taktquelle (180) ein Takt des Netzwerkzeitprotokolls, NTP-Takt, ist.

9. Verfahren nach einem der Ansprüche 2 bis 8, wobei das Fahrzeug (100) eine erste Vorrichtung und eine zweite Vorrichtung umfasst, und sowohl die erste Vorrichtung als auch die zweite Vorrichtung den Datenebenentakt und den Verwaltungsebenentakt umfassen;
das Synchronisieren (S460) des Datenebenentakts basierend auf dem Verwaltungsebenentakt Folgendes umfasst:
Synchronisieren (610) des Datenebenentakts der ersten Vorrichtung basierend auf dem Verwaltungsebenentakt der ersten Vorrichtung; und
das Verfahren ferner Folgendes umfasst:
Sichern (630) von Daten der ersten Vorrichtung auf der zweiten Vorrichtung; und
Steuern (635) des Fahrens des Fahrzeugs (100) durch die zweite Vorrichtung basierend auf den gesicherten Daten der ersten Vorrichtung.

10. Verfahren nach Anspruch 9, wobei das Verfahren ferner Folgendes umfasst:
nachdem die Synchronisation zwischen dem Datenebenentakt der ersten Vorrichtung und dem Verwaltungsebenentakt der ersten Vorrichtung abgeschlossen ist, Steuern des Fahrens des Fahrzeugs (100) durch die erste Vorrichtung.

11. Verfahren nach Anspruch 10, wobei das Verfahren nach dem Steuern des Fahrens des Fahrzeugs (100) durch die erste Vorrichtung ferner Folgendes umfasst:
Synchronisieren (640) des Datenebenentakts der zweiten Vorrichtung basierend auf dem Verwaltungsebenentakt der zweiten Vorrichtung.

12. Taktsynchronisationsvorrichtung (1300), wobei die Vorrichtung (1300) in einem Fahrzeug (100) verwendet wird sowie einen Prozessor (1302) und einen Speicher (1304) umfasst, wobei der Speicher (1304) dazu konfiguriert ist, Programmanweisungen zu speichern, und der Prozessor (1302) dazu konfiguriert ist, die Programmanweisungen aufzurufen, um das Zeitsynchronisationsverfahren nach einem der Ansprüche 1 bis 11 durchzuführen.

13. Fahrzeug (100), umfassend die Taktsynchronisationsvorrichtung (1300) nach Anspruch 12.

14. Computerlesbares Speichermedium, wobei das computerlesbare Speichermedium Programmanweisungen speichert, und, wenn die Programmanweisungen durch einen Prozessor ausgeführt werden, das Zeitsynchronisationsverfahren nach einem der Ansprüche 1 bis 11 implementiert wird.

15. Chip, wobei der Chip einen Prozessor und eine Datenschnittstelle umfasst, und der Prozessor über die Datenschnittstelle in einem Speicher gespeicherte Anweisungen liest, um das Zeitsynchronisationsverfahren nach einem der Ansprüche 1 bis 11 durchzuführen.

## Revendications

1. Procédé de synchronisation d'horloge, dans lequel le procédé est appliqué à un véhicule (100) et comprend :
l'obtention (S210) d'un premier signal, dans lequel le premier signal comprend des informations d'horloge d'une source d'horloge externe (180) ;
la détermination (S215) d'une qualité de signal du premier signal ;
la détermination (S220) d'un mode d'horloge sur la base de la qualité de signal du premier signal, dans lequel le mode d'horloge comprend un premier mode d'horloge ou un second mode d'horloge, et lorsque le véhicule (100) fonctionne selon le premier mode d'horloge, le véhicule (100) obtient des premières informations d'horloge de la source d'horloge externe (180) et lorsque le mode d'horloge est le premier mode d'horloge, l'horloge de plan de données et l'horloge de plan de gestion utilisent la source d'horloge externe (180) comme même source d'horloge ; la détermination du mode d'horloge en fonction de la qualité de signal du premier signal comprend : lorsque la qualité de signal du premier signal est supérieure ou égale à un premier seuil, la détermination que le mode d'horloge est le premier mode d'horloge ; ou lorsque la qualité de signal du premier signal est inférieure au premier seuil, la détermination que le mode d'horloge est le second mode d'horloge ;
**caractérisé en ce que**, lorsque le véhicule (100) fonctionne selon le second mode d'horloge, le véhicule (100) obtient les premières informations d'horloge et les secondes informations d'horloge respectivement de la source d'horloge externe (180) et d'une source d'horloge interne, dans lequel la source d'horloge interne est située dans le véhicule (100) ; et
lorsque le mode d'horloge est le second mode d'horloge, la synchronisation d'une horloge de plan de gestion sur la base des premières informations d'horloge et la synchronisation d'une horloge de plan de données sur la base des secondes informations d'horloge.

2. Procédé selon la revendication 1, dans lequel le procédé comprend également : la synchronisation (610) de l'horloge de plan de données sur la base de l'horloge de plan de gestion.

3. Procédé selon la revendication 2, dans lequel avant la synchronisation (S460) de l'horloge de plan de données sur la base de l'horloge de plan de gestion, le procédé comprend également :
la détermination que le véhicule (100) a besoin de communiquer avec un dispositif externe.

4. Procédé selon la revendication 2 ou 3, dans lequel avant la synchronisation (S460) de l'horloge de plan de données sur la base de l'horloge de plan de gestion, le procédé comprend également :
la détermination qu'une différence de temps entre l'horloge de plan de données et l'horloge de plan de gestion est supérieure ou égale à un deuxième seuil.

5. Procédé selon l'une quelconque des revendications 2 à 4, dans lequel avant la synchronisation (S460) de l'horloge de plan de données sur la base de l'horloge de plan de gestion, le procédé comprend également :
la détermination que la vitesse de véhicule du véhicule (100) est inférieure ou égale à un troisième seuil.

6. Procédé selon l'une quelconque des revendications 2 à 5, dans lequel avant la synchronisation (S460) de l'horloge de plan de données sur la base de l'horloge de plan de gestion, le procédé comprend également :
la détermination que le véhicule (100) est pris en charge.

7. Procédé selon l'une quelconque des revendications 2 à 6, dans lequel le procédé comprend également : la détermination de la source d'horloge externe (180) sur la base d'un environnement dans lequel se trouve le véhicule (100).

8. Procédé selon la revendication 7, dans lequel la détermination de la source d'horloge externe (180) sur la base d'un environnement dans lequel se trouve le véhicule (100) comprend :
lorsque le véhicule (100) se trouve sur une route ouverte ou à une entrée et une sortie entre un tunnel et une route ouverte,
la détermination que la source d'horloge externe (180) est une horloge d'un système mondial de navigation par satellite, GNSS ; ou
lorsque le véhicule (100) se trouve dans un tunnel, sous un pont ou dans un garage souterrain, la détermination que la source d'horloge externe (180) est une horloge d'un protocole de temps réseau, NTP.

9. Procédé selon l'une quelconque des revendications 2 à 8, dans lequel le véhicule (100) comprend un premier appareil et un second appareil, et le premier appareil et le second appareil comprennent tous deux l'horloge de plan de données et l'horloge de plan de gestion ;
la synchronisation (S460) de l'horloge de plan de données sur la base de l'horloge de plan de gestion comprend :
la synchronisation (610) de l'horloge de plan de données du premier appareil sur la base de l'horloge de plan de gestion du premier appareil ; et
le procédé comprend également :
la sauvegarde (630) de données du premier appareil sur le second appareil ; et
la commande (635), par le second appareil, du déplacement du véhicule (100) sur la base des données sauvegardées du premier appareil.

10. Procédé selon la revendication 9, dans lequel le procédé comprend également :
une fois la synchronisation entre l'horloge de plan de données du premier appareil et l'horloge de plan de gestion du premier appareil terminée, la commande du déplacement du véhicule (100) par le premier appareil.

11. Procédé selon la revendication 10, dans lequel, après la commande, par le premier appareil, du déplacement du véhicule (100), le procédé comprend également :
la synchronisation (640) de l'horloge de plan de données du second appareil sur la base de l'horloge de plan de gestion du second appareil.

12. Appareil de synchronisation d'horloge (1300), dans lequel l'appareil (1300) est utilisé dans un véhicule (100), et comprend un processeur (1302) et une mémoire (1304), la mémoire (1304) est configurée pour stocker des instructions de programme, et le processeur (1302) est configuré pour invoquer les instructions de programme afin de réaliser le procédé de synchronisation de temps selon l'une quelconque des revendications 1 à 11.

13. Véhicule (100), comprenant l'appareil de synchronisation d'horloge (1300) selon la revendication 12.

14. Support de stockage lisible par ordinateur, dans lequel le support de stockage lisible par ordinateur stocke des instructions de programme, et lorsque les instructions de programme sont exécutées par un processeur, le procédé de synchronisation de temps selon l'une quelconque des revendications 1 à 11 est mis en œuvre.

15. Puce, dans laquelle la puce comprend un processeur et une interface de données, et le processeur lit, via l'interface de données, des instructions stockées dans une mémoire, pour réaliser le procédé de synchronisation de temps selon l'une quelconque des revendications 1 à 11.
